# EUROPÄISCHE PATENTSCHRIFT

(11) **EP 0 404 899 B1**
(45) Veröffentlichungstag und Bekanntmachung des Hinweises auf die Patenterteilung: **08.03.1995**
(21) Anmeldenummer: 90900182.8
(22) Anmeldetag: 21.12.1989
(51) Int. Cl.: G06K 17/00, G11B 15/68

(54) **VERFAHREN UND VORRICHTUNG ZUM BETREIBEN EINES AUTOMATISCHEN DATENTRÄGERARCHIVS**
PROCESS AND DEVICE FOR OPERATING AN AUTOMATIC DATA CARRIER ARCHIVE
PROCEDE ET DISPOSITIF D'EXPLOITATION D'UN SYSTEME D'ARCHIVAGE AUTOMATIQUE DE SUPPORTS DE DONNEES

(30) Priorität: 22.12.1988 DE 3843218
(43) Veröffentlichungstag der Anmeldung: 02.01.1991
(60) Teilanmeldung: 94105342.3
(73) Patentinhaber: GRAU GMBH & CO., D-73527 Schwäbisch Gmünd (DE)
(72) Erfinder: KRAYER, Werner, Friedrich, D-7071 Durlangen (DE); BAUR, Rolf, Verstorben (DE)
(74) Vertreter: Hoeger, Stellrecht & Partner
(86) Internationale Anmeldenummer: EP8901591
(87) Internationale Veröffentlichungsnummer: WO9007161

(56) Entgegenhaltungen:
- EP-A- 0 045 645
- US-A- 3 881 053
- US-A- 4 219 296

## Beschreibung

Die Erfindung betrifft ein Verfahren zum Betreiben eines einer Rechenanlage als Datenspeicher zugeordneten automatischen Datenträgerarchivs, wobei Datenträger durch von einer Steuereinrichtung des Datenträgerarchivs durchgeführte Transportabläufe einer Handhabungsvorrichtung für die Datenträger zwischen verschiedenen Stationen des Datenträgerarchivs hin- und hertransportiert werden, wobei die Stationen des Datenträgerarchivs mindestens einen Datenträgerspeicher und eine Schreib-/Lesestation für die Datenträger umfassen.

Solche Datenträgerarchive sind insbesondere aus großen Rechenzentren bekannt, bei denen beispielsweise in Datensicherungsräumen ohne die Einschaltung von Bedienungspersonal eine Vielzahl von Datenträgern für die Großrechenanlage bereitgehalten wird.

Der Transport der Datenträger findet zwischen den Datenträgerspeichern, die beispielsweise aus Drehtürmen oder Regalen gebildet werden, und einer Schreib-/Lesestation, zwischen den Datenträgerspeichern und der Ein-/Auslagerungsstation oder der Ein-/Auslagerungsstation und der Schreib-/Lesestation statt. Über die Ein-/Auslagerungsstation werden Datenträger mit der Umgebung ausgetauscht, das heißt, es werden beispielsweise neue bzw. wiederbespielbare Datenträger, beispielsweise Band-Kassetten, für die Aufzeichnung von neuem Datenmaterial für die Verwendung im Archiv bereitgestellt, es können Datenträger aus parallelen Archiven über diese Station übernommen werden oder aber es werden sogenannte Fremddatenträger, die aus anderen Rechenzentren stammen, für das eigene Rechenzentrum über die Ein-/Auslagerungsstation und das eigene Archiv nutzbar gemacht.

Genauso kann die Ein-/Auslagerungsstation zur Übergabe von Reinigungsvorrichtungen, beispielsweise Reinigungskassetten, zur Reinigung der Schreib-/Leseköpfe in den Schreib-/Lesestationen übergeben werden.

Bei den bisher bekannten computergesteuerten Datenarchiven wurden die Anforderungen der verschiedenen Transportfunktionen nach zeitlicher Reihenfolge des Eintreffens der Anforderungen abgearbeitet, wobei gegebenenfalls zur Wartung der Schreib-/Lesestation ein Reinigungsvorgang zwischen die Transportfunktionen eingeschoben wurde.

In der zeitlichen Auslastung eines solchen computergesteuerten Datenarchivs werden immer wieder Belastungsspitzen festgestellt, und zwar insbesondere zum Zeitpunkt der regelmäßigen Datensicherung, während der die zur Sicherung vorgesehenen Daten für eine Bearbeitung nicht zur Verfügung stehen.

Um allzulange Wartezeiten zu vermeiden, mußte entweder die Handhabungskapazität von Datenträgern pro Zeiteinheit in dem Bandarchiv erhöht werden, indem beispielsweise derselben Datenträger eine weitere Handhabungsvorrichtung zugeordnet wurde oder aber indem die Archive von vornherein so aufgebaut wurden, daß eine Handhabungsvorrichtung eine von vornherein niedriger angesetzte Zahl von Datenträgern zugewiesen bekommt. Die letztere Vorgehensweise bedingt jedoch einen größeren Raumbedarf des Archivs.

Hiervon ausgehend stellt sich die vorliegende Erfindung die Aufgabe, die Verfügbarkeit der Datenträger zu verbessern.

Diese Aufgabe wird bei dem eingangs beschriebenen Verfahren erfindungsgemäß dadurch gelöst, daß jeder Transportablauf durch mindestens eine Transportfunktion durchgeführt wird, daß jeder Transportfunktion eine Priorität zugeordnet wird, daß eine Transportfunktion mit höherer Priorität vorrangig gegenüber einer Transportfunktion mit niedriger Priorität durchgeführt wird, und daß bei Anforderung eines Datenträgers in der Schreib-/Lesestation durch die Rechenanlage mindestens der unmittelbare Transport zwischen der Schreib-/Lesestation und einer weiteren der Stationen mit einer Transportfunktion mit höchster Priorität durchgeführt wird.

Das erfindungsgemäße Verfahren hat somit den großen Vorteil, daß andere, weniger wichtige Transportfunktionen während der Zeiten, während denen die Rechenanlage einen Datenträger in einer Schreib-/Lesestation anfordert, zurückgestellt werden und somit der Betrieb der Rechenanlage nicht durch die anderen wesentlichen weniger wichtigen Transportfunktionen gestört wird, so daß diese anderen Transportfunktionen dann durchgeführt werden können, wenn seitens der Rechenanlage keine Anforderung eines Datenträgers vorliegt.

Insbesondere ist erfindungsgemäß vorgesehen daß, von dem Datenträgerarchiv durchzuführenden, jedoch nicht unmittelbar von der Rechenanlage angeforderten Transportfunktionen eine niedrigere Priorität zugeordnet wird. Vorzugsweise ist dabei eine unmittelbare Anforderung durch die Rechenanlage eine solche, bei deren Nichterfüllung die Rechenanlage ihr Programm nicht oder nur bedingt fortführen könnte und somit die Arbeitskapazität der Rechenanlage beeinträchtigt.

Besonders vorteilhaft ist es dabei, wenn eine erste Transportfunktion vorgesehen wird, bei welcher ein Transport eines-der Datenträger zwischen dem Datenträgerspeicher und einem der Schreib-/Lesestation zugriffsnah angeordneten Zwischenspeicher erfolgt, wenn der ersten Transportfunktion eine niedere Priorität zugeordnet wird, wenn eine zweite Transportfunktion vorgesehen wird, bei welcher ein Transport eines der Datenträger zwischen den Zwischenspeichern und der Schreib-/Lesestation erfolgt, wenn ausgewählte Transportabläufe vor oder nach deren Anforderung durch die Rechenanlage durch die erste Transportfunktion vorbereitet oder abgeschlossen werden und wenn bei Anforderung eines ausgewählten Transportablaufs durch die Rechenanlage nur die zweite Transportfunktion mit höchster Priorität durchgeführt wird.

Bei dieser Vorgehensweise besteht also die Möglichkeit, einzelne Transportabläufe auszuwählen, die dann in zwei Transportfunktionen unterteilt werden, wobei das Vor- oder Nachbereiten durch die erste Transportfunktion, nicht zeitgleich mit der Anforderung durch die Rechenanlage erfolgen muß und lediglich die zweite Transportfunktion unmittelbar bei Anforderung der Rechenanlage zu erfolgen hat. Dies schafft die Möglichkeit, beispielsweise bei häufig auftretenden und insbesondere der Steuerungseinrichtung bekannten Transportabläufen, diese entsprechend vorzubereiten und somit über den zugriffsnah zur Schreib-/Lesestation angeordneten Zwischenspeicher die Voraussetzung dafür zu schaffen, daß beim Eintreffen einer Anforderung dieses Datenträgers durch die Rechenanlage die Handhabungsvorrichtung keine großen Wege mehr zurückzulegen braucht, und somit unter möglichst kurzen Greif- oder Verfahrwegen den angeforderten Datenträger in die jeweilige Schreib-/Lesestation einlegen kann. Dies spart erheblich Zeit, so daß die Rechenanlage möglichst ungehindert weiterarbeiten kann und die langen Transportwege, die von der Handhabungsvorrichtung, beispielsweise beim Aufsuchen eines Datenträgers in dem Datenträgerspeicher, durchzuführen wären entfallen, um die eigentliche Anforderung zu bearbeiten. Die langen Verfahrwege können dann in den Zeiten durchgeführt werden, in denen seitens der Rechenanlage keine Anforderung eines Datenträgers vorliegt.

Insbesondere ist daher zweckmäßigerweise vorgesehen, daß der ausgewählte Transportablauf ein vorhersehbarer Transportablauf eines Datenträgers von oder zu der Schreib-/Lesestation ist, beispielsweise also ein Transportablauf von der Schreib-/Lesestation weg, welcher zunächst lediglich erfordert, daß die Schreib-/Lesestation freigemacht wird, so daß es für den weiteren Betrieb des erfindungsgemäßen Datenträgerarchivs lediglich erforderlich ist, den Datenträger von der Schreib-/Lesestation in den Zwischenspeicher zu transportieren und der nachfolgende, somit vorhersehbare Transportablauf zu der End-Station im Datenträgerspeicher nachfolgend ohne zeitliche Limitierung durch eine erste Transportfunktion erfolgen kann. Andererseits ist aber auch ein vorhersehbarer Transportablauf zu der Schreib-/Lesestation dann gegeben, wenn es bereits aus anderen Umständen bekannt ist, daß ein derartiger Datenträger in nächster Zeit von der Rechenanlage angefordert werden wird, so daß in diesem Fall zunächst mit der ersten Transportfunktion der Datenträger bereits im Zwischenspeicher ohne zeitliche Begrenzung vorausschauend plaziert wird und bei ankommender Anforderung seitens der Rechenanlage, lediglich noch der Transport vom Zwischenspeicher zu der Schreib-/Lesestation erforderlich ist.

Besonders zweckmäßig ist es im Rahmen des erfindungsgemäßen Verfahrens, wenn im Falle eines in einer Schreib-/Lesestation befindlichen Datenträgers vor einem Transport eines weiteren Datenträgers zu dieser Schreib-/Lesestation ein Entfernen des in dieser befindlichen Datenträgers vor dem Transport des weiteren Datenträgers erfolgt und somit sichergestellt ist, daß durch die Prioritätszuordnung entsprechend dem erfindungsgemäßen Verfahren nicht versucht wird, einen Datenträger in eine bereits von einem Datenträger besetzte Schreib-/Lesestation einzusetzen.

Besonders vorteilhaft ist es im Rahmen des erfindungsgemäßen Verfahrens, wenn das Entfernen jedes Datenträgers in Form eines ausgewählten Transportablaufs erfolgt.

Im Rahmen des erfindungsgemäßen Verfahrens ist es außerdem zweckmäßig, wenn als weitere Station eine Ein-/Auslagerungsstation vorgesehen wird.

Beim Vorsehen einer derartigen weiteren Station ist es ebenfalls zweckmäßig, wenn im Rahmen des erfindungsgemäßen Verfahrens die Transportabläufe unter Einbeziehung der Schreib-/Lesestation entsprechend den den Datenträgerspeicher betreffenden Transportabläufen erfolgen, d.h., daß dieselben Prioritätszuordnungen in den Transportfunktionen vorgesehen werden, wie bei dem vorstehend beschriebenen Transport zwischen dem Datenträgerspeicher und der Schreib-/Lesestation.

Hinsichtlich der Plazierung des Zwischenspeichers wurden bei den bisherigen Angaben zum erfindungsgemäßen Verfahren keine näheren Angaben gemacht.

So ist es besonders sweckmäßig, wenn der Zwischenspeicher als zugriffsnaher Bereich des Datenträgerspeichers definiert wird.

Im Rahmen der erfindungsgemäßen Lösung ist unter dem Begriff zugriffsnah stets eine Anordnung des Zwischenspeichers relativ zu der Schreib-/Lesestation so zu treffen, daß ein möglichst kurzer Zugriffsweg der Handhabungsvorrichtung beim Transport des Datenträgers zwischen dem Zwischenspeicher und der Schreib-/Lesestation notwendig ist, also beispielsweise eine Anordnung benachbart zur Schreib-/Lesestation.

Daher ist es im Rahmen des erfindungsgemäßen Verfahrens besonders zweckmäßig, wenn der Zwischenspeicher über der Schreib-/Lesestation angeordnet wird.

Noch vorteilhafter ist es, wenn der Zwischenspeicher mit der Handhabungsvorrichtung mitverfahren wird, da in diesem Fall der Zwischenspeicher nicht nur zwangsläufig aufgrund des Verfahrens der Handhabungsvorrichtung zugriffsnah zur Schreib-/Lesestation plaziert wird, sondern auch zugriffsnah zu der jeweiligen Zugriffsposition zu den anderen Stationen, d.h. beispielsweise zu dem Datenträgerspeicher oder den Ein-/Auslagerungsstationen.

Besonders vorteilhaft lassen sich mit einem derartigen, mit der Handhabungsvorrichtung mitverfahrenden Zwischenspeicher auch Handhabungsvorrichtungen ausführen, bei denen beispielsweise eine Vielzahl von Datenträgern von einer Station im Datenträgerarchiv zur anderen Station transportiert werden sollen. Diese können dann sämtlich mit kurzen Zugriffszeiten von der einen Station in den Zwischenspeicher eingeladen werden und dann nach Verfahren der Handhabungsvorrichtung von dem Zwischenspeicher in die andere Station entladen werden oder umgekehrt.

Besonders zweckmäßig hat es sich im Rahmen des erfindungsgemäßen Verfahrens erwiesen, wenn der Zwischenspeicher im Greifbereich der in einer Zugriffsposition zur Schreib-/Lesestation stehenden Handhabungsvorrichtung angeordnet wird.

Insbesondere ist im Rahmen der erfindungsgemäßen Lösung, vorzugsweise wenn große Datenträgerspeicher mit einer Vielzahl von Drehtürmen verwendet werden, vorgesehen, daß die Handhabungsvorrichtung zum Ausführen von Transportabläufen, längs einer längsseits der Schreib-/Lesestation und des Datenträgerspeichers verlaufenden Bahn verfahren wird.

Im einfachsten Fall ist dabei vorgesehen, daß die Handhabungsvorrichtung zum Ausführen der ersten Transportfunktion längs der Bahn verfahren wird. Außerdem ist zweckmäßigerweise vorgesehen, daß die Handhabungsvorrichtung zum Ausführen einer zweiten Transportfunktion auf der Bahn stehen bleibt.

Ein besonders vorteilhaftes Ausführungsbeispiel eines erfindungsgemäßen Verfahrens zum Betreiben eines automatischen Datenträgerarchivs, wobei Datenträger durch beliebig mittels einer Steuervorrichtung auswählbare Transportfunktionen einer Handhabungsvorrichtung für die Datenträger zwischen verschiedenen Stationen des Archivs hin- und hertransportiert werden und wobei die Stationen des Archivs mindestens einen Datenträgerspeicher und eine Schreib-/Lesestation für die Datenträger umfassen, sieht vor, daß einer jeden Transportfunktion eine Priorität zugeordnet wird, daß eine Transportfunktion mit höherer Priorität vorrangig gegenüber einer Transportfunktion mit niedrigerer Priorität ausgeführt wird, daß ein häufig benötigter Transport eines Datenträgers von einer ersten zu einer zweiten Station in zwei Transportfunktionen unterteilt wird, daß die erste Transportfunktion den Transport der Datenträger zwischen dem Datenträgerspeicher und dem Zwischenspeicher und die zweite Transportfunktion den Transport der Datenträger zwischen dem Zwischenspeicher und der Schreib-/Lesestation betrifft, daß der Zwischenspeicher für die Handhabungsvorrichtung zugriffsnah zur jeweiligen zweiten Station angeordnet wird und daß der ersten Transportfunktion eine niedrigere Priorität und der zweiten Transportfunktion eine hohe Priorität zugeordnet wird.

Bei einem weiteren vorteilhaften Ausführungsbeispiel des erfindungsgemäßen Verfahrens zum Betreiben eines automatischen Datenträgerarchivs, wobei Datenträger durch beliebig mittels einer Steuervorrichtung auswählbare Transportfunktionen einer Handhabungsvorrichtung für die Datenträger zwischen verschiedenen Stationen des Archivs hin- und hertransportiert werden und wobei die Stationen des Archivs mindestens einen Datenträgerspeicher und eine Schreib-/Lesestation für die Datenträger umfassen, sieht vor, daß einer jeden Transportfunktion eine Priorität zugeordnet wird, daß eine Transportfunktion mit höherer Priorität vorrangig gegenüber einer Transportfunktion mit niedrigerer Priorität ausgeführt wird, daß ein lange Fahrwege der Handhabungsvorrichtung erfordernder Transport eines Datenträgers von einer ersten zu einer zweiten Station in zwei Transportfunktionen unterteilt wird, daß die erste Transportfunktion den Transport der Datenträger zwischen dem Datenträgerspeicher und dem Zwischenspeicher und die zweite Transportfunktion den Transport der Datenträger zwischen dem Zwischenspeicher und der Schreib-/Lesestation betrifft, daß der Zwischenspeicher für die Handhabungsvorrichtung zugriffsnah zur jeweiligen zweiten Station angeordnet wird und daß der ersten Transportfunktion eine niedrige Priorität und der zweiten Transportfunktion eine hohe Priorität zugeordnet wird.

Alle vorstehend beschriebenen Varianten des erfindungsgemäßen Verfahrens eröffnen nun verschiedene vorteilhafte neue Nutzungsmöglichkeiten eines computergesteuerten Datenträgerarchivs. Beispielsweise können verschiedene Rechenanlagen unabhängig voneinander auf das Datenträgerarchiv zugreifen, wobei den von einer jeden Datenverarbeitungsanlage angeforderten Transportfunktionen unterschiedliche Prioritäten zugeordnet werden. Dies ermöglicht die Nutzung eines gemeinsamen Datenbestandes durch verschiedene Datenverarbeitungsanlagen, ohne daß diese untereinander der Abstimmung benötigen. Die Abstimmung wird hierbei in der Steuervorrichtung für die Datenträgerhandhabungsvorrichtung über die Vergabe der Prioritäten durchgeführt. Ebenso ist es möglich, Datenträgeranforderungen in dringliche und weniger dringliche zu unterscheiden, so daß die Steuervorrichtung die Transportfunktionen entsprechend ihrer Priorität aufruft und nicht mehr vorrangig nach der zeitlichen Reihenfolge, nach der die Anforderungen eintreffen. Mit diesem Verfahren können besonders eilige Datenträgeranforderungen bevorzugt bedient werden, während solche Anforderungen, für die die Reaktionszeiten zur Bereitstellung des Datenträgers nicht kritisch sind, erst später ausgeführt werden.

Dabei ist durch die Untergliederung von häufig benötigten Transportabläufen in Zeiten geringer Auslastung der Handhabungsvorrichtung die Möglichkeit gegeben, in einem Vorgriff später benötigte Funktionen teilweise durch erste Transportfunktionen auszuführen, so daß im Falle einer konkreten Anforderung einer solchen Funktion lediglich noch die zweite Transportfunktion ausgeführt werden muß.

Die hierbei erzielte Zeitersparnis erhöht erheblich die Verfügbarkeit der Datenträger (bzw. verkürzt die Reaktionszeit des Archivs bei einer Datenträger-Anforderung), und zwar insbesondere in Zeiten der Spitzenbelastung der Handhabungsvorrichtung .

Durch die Zuweisung einer der niedrigsten Prioritäten zur ersten Transportfunktion kann diese zu einer höheren Grundauslastung der Handhabungsvorrichtung führen, wobei aber jede konkrete oder aktuelle Anforderung eines Datenträgers vorrangig behandelt wird.

Besonders vorteilhafte Möglichkeiten für die Organisation des automatischen Datenarchivs selbst werden ebenfalls durch das erfindungsgemäße Verfahren zum Betreiben des Datenarchivs eröffnet. Es wird hierbei nämlich möglich, daß die Steuervorrichtung die Transportfunktion mit niedrigster Priorität bei Bedarf in regelmäßigen Zeitabständen auswählt, wobei sogar ein Dauerbetrieb der Transportfunktion mit niedrigster Priorität bei Bedarf aufrechterhalten werden kann. Treffen dann Anforderungen für Transportfunktionen höherer Priorität ein, so wird der Dauerbetrieb der Transportfunktion mit der niedrigsten oder generell mit einer niedrigeren Priorität unterbrochen und erst dann wieder aufgenommen, wenn alle Anforderungen für Transportfunktionen höherer Priorität behandelt worden sind.

Diese Vorgehensweise eignet sich insbesondere dafür, leere bzw. wiederbespielbare Datenträger, die dem automatischen Datenträgerarchiv über die Ein-/Auslagerungsstation zugeführt werden, zu einem Speicherbereich direkt benachbart der Schreib-/Lesestation zu transportieren. Damit wird der Transportvorgang in der Datensicherungsphase, die regelmäßig eine Spitzenbelastung der Handhabungsvorrichtung bzw. des Datenarchivs beinhaltet, vorbereitet und verkürzt. Dadurch verkürzt sich die gesamte Datensicherungsphase bzw. es sind mit denselben Transportkapazitäten im gleichen Zeitraum umfangreichere Datensicherungsmaßnahmen möglich. Nachdem mit der ersten Transportfunktion der Datenträger von der Ein-/Auslagerungsstation bereits in der Nähe der Schreib-/Lesestation abgelegt wurde, muß dieser in der Datensicherungsphase nur noch mit der zweiten Transportfunktion eine kurze Strecke zur Schreib-/Lesestation transportiert werden. In besonders günstigen Fällen kann die Handhabungsvorrichtung zur Ausführung der zweiten Transportfunktion an einer Position verbleiben, während alle notwendigen Bewegungen von einem Greiferarm ausgeführt werden.

Bei üblichen Datenträgerarchiven kann beispielsweise die Zeit für das Zurverfügungstellen eines bespielbaren Datenträgers von ca. 15 bis 20 Sekunden auf 6 bis 8 Sekunden reduziert werden.

Eine weitere Möglichkeit zur Verbesserung des Zeitverhaltens des Datenträgerarchivs besteht darin, daß als Funktion niedrigster Priorität ein Prüflauf definiert wird, mit dem die Verfügbarkeit einzelner Datenträger verifiziert wird. Dies kann zum einen eine Überprüfung und einen Vergleich der auf der Datenträgerhülle befindlichen Kennzeichnung mit der auf dem Datenträgermaterial selbst vorhandenen Kennung beinhalten oder aber einer Überprüfung, ob der einzelne Datenträger auf der in der Steuervorrichtung abgespeicherten Lagerposition im Datenträgerspeicher vorhanden ist.

Gleicherweise kann man als Transportfunktion niedrigster Priorität eine Umschichtung im Datenträgerarchiv definieren, bei der die Datenträgerspeicherbereiche, die benachbart zu den Schreib-/Lesestationen angeordnet sind, mit den am häufigsten benötigten Datenträgern belegt werden.

Ferner ist es im Rahmen des erfindungsgemäßen Verfahrens vorteilhaft, wenn ein Einlegen eines Reinigungsdatenträgers mit einer Transportfunktion durchgeführt wird, deren Priorität niedriger ist als die höchste Priorität, so daß auch das Einlegen der Reinigungsdatenträger, das ebenfalls nach vorgegebenen Zeitabständen erforderlich ist, nachrangig zu den Transportfunktionen der höchsten Priorität und somit nicht mehr in strenger Zeitfolge durchgeführt werden muß. Bevorzugterweise werden hierzu die Benutzungen der einzelnen Schreib-/Lesestationen registriert und nach Erreichen einer vorgegebenen Zahl von Benutzungen wird die Transportfunktion betreffend den Reinigungsdatenträger aufgerufen und entsprechen ihrer Priorität abgearbeitet.

Solche Transportfunktionen innerhalb des Datenarchivs lassen sich ohne Verlust einer Reaktionszeit in den normalen Dauerbetrieb des Datenträgerarchivs integrieren, so daß ständig eine maximale Verfügbarkeit der Datenträger bei kürzester Reaktionszeit gewährleistet werden kann.

Bei einem besonders bevorzugten Verfahren wird neben der Funktion mit der niedrigsten Priorität eine weitere Funktion mit der nächsthöheren Priorität für einen bedarfsweisen Dauerbetrieb vorgesehen. In diesem Fall löst die Funktion mit der niedrigsten Priorität die Funktion mit der zweitniedrigsten Priorität ab, wenn für die Funktion zweitniedrigster Priorität - zeitweise - kein Bedarf mehr besteht.

Alternativ hierzu oder zusätzlich ist es möglich, die Zuordnung der Prioritäten zu den einzelnen Funktionen während des Betriebs des Archivs zu ändern. Hierdurch läßt sich beispielsweise die Verfügbarkeit einzelner Datenträgertypen dem Anforderungsprofil während der Betriebsdauer der Rechenanlage anpassen.

Insbesondere kann erfindungsgemäß der Wechsel in der Zuordnung der Prioritäten durch einen vorgegebenen Zeittakt herbeigeführt werden oder aber von dem Eintreten eines bestimmten Ereignisses abhängig gemacht werden.

Die Zwischenspeicherung von Datenträgern kann aber nicht nur in dem gesondert als Zwischenspeicher definierten, oder in einem entsprechend definierten und in der Nähe der Schreib-/Lesestation angeordneten Bereich des Datenträgerspeichers erfolgen. Vielmehr lassen sich hierzu bei einer Überlastung dieses Bereichs weitere Teile des Datenträgerspeichers heranziehen, so daß beispielsweise zu bespielende Datenträger von der Ein/Auslagerungsstation in einen weiteren Teil des Speichers übernommen werden und erst dann an den der Schreib-/Lesestation benachbarten Bereich abgegeben werden, wenn dort wieder eine Speicherposition freigeworden ist.

Ebenso kann die Transportfunktion, mit der ein Datenträger von der Schreib-/Lesestation direkt zur Ein-/Auslagerungsstation transportiert werden soll, in zwei Transportfunktionen unterteilt werden. Hierbei umfaßt die zweite, höherrangige Transportfunktion die Entnahme des Datenträgers aus der Schreib-/Lesestation (auch hier Maximierung der verfügbaren Kapazitäten!) und die zwischenzeitliche Lagerung des Datenträgers in dem Zwischenspeicher oder einen als solchen definierten Bereich des Datenträgerspeichers. Die erste, niederrangige Transportfunktion transportiert den Datenträger dann zur Ein-/Auslagerungsstation, sobald dort eine Speicherposition frei wird und/oder sobald keine Anforderung einer Transportfunktion mit höherer Priorität vorliegt.

Im Dauerbetrieb kann es, insbesondere bei der Schachtelung der Prioritäten und bei der Unterteilung mehrerer Funktionen in zwei Transportfunktionen, zu der Bildung einer "Warteschlange" für Transportfunkttionen mit jeweils niedrigerer Priorität kommen, die dann abgearbeitet wird, wenn Anforderungen von Transportfunktionen mit höherer Priorität ausbleiben. Vorzugsweise werden dabei Transportfunktionen mit gleicher Priorität entsprechend ihres Zeitrangs hintereinandergereiht.

Selbstverständlich ist es möglich, die Länge der "Warteschlange" zu begrenzen und beim Erreichen dieser Grenze die Prioritäten der Transportfunktionen - zeitweise - zu ändern, so daß nicht der Fall eintreten kann, daß über längere Zeiträume die niederrangigen Transportfunktionen nicht ausgeführt werden und eine Überbelegung der als Zwischenspeicher definierten Speicherbereiche auftritt.

Bei einem bevorzugten Verfahren werden die zu transportierenden Datenträger vor der Entnahme aus dem Datenträgerspeicher oder auch aus der Ein-/Auslagerungsstation über eine von außen abtastbare Markierung identifiziert. Diese Vorgehensweise vermeidet im Falle von falsch einsortierten Datenträgern im Datenspeicher bzw. in der Ein-/Auslagerungsstation einen unnötigen Transport des Datenträgers beispielsweise zur Schreib-/Lesestation, bei der ebenfalls nur die mangelnde Identität mit dem verlangten Datenträger festgestellt werden könnte.

Als Markierungen werden vorzugsweise optische und/oder magnetische Kennungsträger verwendet. Die optischen Kennungen werden vorzugsweise in Form-eines Barcodes auf den Datenträger, vorzugsweise seine Hülle, aufgebracht. Die Handhabungsvorrichtung, insbesondere der Greifer der Handhabungsvorrichtung, wird mit einer entsprechenden Abtastvorrichtung bzw. einem Lesegerät ausgestattet.

In diesem Fall kann dann zusätzlich noch vorgesehen sein, daß die Handhabungsvorrichtung vor der Entnahme der Datenträger aus den jeweiligen Stationen, insbesondere aus dem Datenträgerspeicher, die exakte Lage des Datenträgers bestimmt. Dies kann beispielsweise dadurch geschehen, daß die genaue Lage einer Justierungs- oder Orientierungsmarkierung auf dem Datenträger detektiert und dadurch eine Selbstjustierung der Handhabungsvorrichtung vorgenommen wird. Dies stellt sicher, daß der Datenträger von der Handhabungsvorrichtung so ergriffen und transportiert werden kann, daß der Datenträger sich stets in einer definierten Lage zu der Handhabungsvorrichtung befindet.

Dadurch wird ein undefiniertes Einsetzen der Datenträger sowohl in die Speicher als auch in die Schreib-/Lesegeräte vermieden oder aber der Verlust eines nur unzureichend erfaßten Datenträgers während des Transports.

Insbesondere bei der Ausrüstung der Datenträger mit von außen abtastbaren Markierungen empfiehlt es sich, als Ergänzung hierzu nach dem Einlegen des Datenträgers in die Schreib-/Lesestation zunächst eine auf dem Datenträger selbst aufgebrachte Kennung zu ermitteln und mit der von der Handhabungsvorrichtung ermittelten Kennung zu vergleichen. Diese Überprüfung dient gleichzeitig der Kontrolle, ob der Datenträger mit der korrekten Markierung versehen ist. Da das Aufbringen der Markierungen auf der Datenträgerhülle in aller Regel von Hand geschieht, existieren hier Fehlermöglichkeiten, die gemäß dem erfindungsgemäßen Verfahren bei der ersten Ingebrauchnahme des Datenträgers erkannt werden.

Die Datenträger, bei denen eine unterschiedliche Kennung auf der Markierung und auf dem Datenträger festgestellt wird, wird entweder aussortiert und gesondert abgelegt oder aber in den Speicher zurückgestellt und für den weiteren Gebrauch gesperrt. Daneben ist auch eine Auslagerung des Datenträgers und deren Transport zu einer Station vorstellbar, bei der die korrekte Beschriftung aufgebracht wird.

Um auf die Datenträger in dem Datenträgerarchiv gezielt zugreifen zu können, ist es notwendig, im Speicherbereich der Rechenanlage und/oder der Steuervorrichtung die entsprechenden Positionen der Datenträger zu speichern. Diese Positionsspeicherung, auch Archivspiegel genannt, erhöht die Sicherheit im Zugriff auf einen Datenträger insbesondere bei der redundanten Führung des Archivspiegels.

Obwohl die Transportfunktionen der Handhabungsvorrichtung vorzugsweise vollautomatisch von einer Rechenanlage aufgerufen und ausgewählt werden, kann vorgesehen sein, daß zusätzlich oder alternativ die Transportfunktionen durch Bedienungspersonal auswählbar sind. Dabei werden die Steuerbefehle über eine Konsole vom Bedienungspersonal direkt an die Steuereinrichtung übertragen. Dies hat den Vorteil, daß selbst bei einer Unterbrechung der Verbindung von der Rechenanlage zur Steuereinrichtung ein Betrieb des automatischen Datenarchivs möglich ist, wobei die Auswahllisten von der Rechenanlage an den Operator gegeben werden, der dann die Transportfunktionen über die Konsole an die Steuereinrichtung weitergibt.

Bei dieser Verfahrensweise empfiehlt es sich vor allem, die Positionen der Datenträger im Speicher der Steuereinrichtung und der anfordernden Rechenanlage getrennt zu aktualisieren, auch wenn keine Rückmeldung von der Steuereinrichtung an die Rechenanlage abgesetzt werden kann. Bei dieser Verfahrensweise kann man dann zusätzlich nach Wiederherstellung der Verbindung zwischen Rechenanlage und Steuereinrichtung einen Abgleich der in der Steuereinrichtung und der Rechenanlage gespeicherten Datenträgerpositionen (Archivspiegel) vornehmen und gegebenenfalls durch die Rechenanlage eine Anforderungsliste für Transportfunktionen erstellen lassen, durch deren Abarbeitung die Identität zwischen den in der Steuereinrichtung und der Rechenanlage gespeicherten Datenträgerpositionen wiederhergestellt wird.

Die vorstehend erläuterten drei Verfahrensteile innerhalb eines Verfahrens zum Betreiben eines automatischen Datenträgerarchivs, nämlich
(a) das Betreiben des Datenträgerarchivs über Transportfunktionen unterschiedlicher Priorität,
(b) die Überprüfung der Datenträgeridentität und
(c) der redundanten Führung des Archivspiegels und der Möglichkeit der von der direkten Verbindung von Rechenanlage und Steuereinrichtung unabhängigen Bedienung des Datenträgerarchivs, beispielsweise durch Bedienungspersonal,

stellen jeweils bereits für sich allein gesehen Verfahren dar.

In der Kombination der einzelnen Verfahrenskomponenten jedoch wird eine überragende Fehlertoleranz des Gesamtverfahrens erreicht, die einen operatorlosen 24-StundenBetrieb möglich macht und zudem noch gestattet, daß selbst im Falle des Ausfalls der direkten Verbindung von Rechenanlage und Steuereinrichtung gegebenenfalls über Bedienungspersonal die Funktion des Datenträgerarchivs weiter aufrechterhalten wird und wobei gegebenenfalls nach der Wiederherstellung der direkten Verbindung zwischen Rechenanlage und Steuereinrichtung ein automatischer Abgleich zwischen dem in der Rechenanlage und der Steuereinrichtung geführten redundanten Archivspiegel stattfindet.

Eine weitere Aufgabe der Erfindung ist es, ein automatisches Datenträgerarchiv so weiterzubilden, daß es insbesondere zur Durchführung eines der zuvor beschriebenen Verfahren geeignet ist.

Die von der Firma Grau auf der CeBIT ′88 vorgestellten automatischen Datenträgerarchive weisen neben dem Datenträgerspeicher und dem mit der Rechenanlage in Verbindung stehenden Schreib-/Lesegerät ein Handhabungsgerät auf, das aus der Vielzahl der im Datenträgerarchiv vorhandenen Datenträger den angeforderten einzelnen Datenträger auswählt und diesen im Schreib-/Lesegerät zur Bearbeitung ablegt. Um den Datenbestand im Datenträgerarchiv variabel und flexibel zu halten und insbesondere auch um das gesamte Datenträgerarchiv in einem abgeschlossenen Raum unterbringen zu können, wie dies auch für die zentrale Rechenanlage üblich ist, bei gleichzeitiger Gewährleistung eines Maximums an Verfügbarkeit, Datensicherheit und Datenschutz, ist eine Ein-/Auslagerungsstation vorgesehen, die das in sich räumlich abgeschlossene Datenträgerarchiv mit der Außenwelt verbindet. Über die Ein-/Auslagerungsstation können Datenträger mit der Umgebung ausgetauscht werden bzw. es können unbespielte bzw. wiederbespielbare Datenträger in das Datenträgerarchiv zur Aufnahme neuer Daten eingeschleust werden. Zur Wartung der Schreib-/Lesegeräte ist es ebenfalls erforderlich, Reinigungsvorrichtungen im Format eines Datenträgers, beispielsweise bei der Verwendung von Datenbandkassetten, sogenannte Reinigungskassetten, oder auch als Reinigungsdatenträger bezeichnet, in das Datenträgerarchiv einzuschleusen, so daß die Schreib-/Lesegeräte in regelmäßigen Abständen einem Reinigungszyklus unterworfen werden können.

Wie zuvor beschrieben, unterliegt die Auslastung eines Datenträgerarchivs bzw. die Auslastung der Handhabungsvorrichtung beim Transport der Datenträger innerhalb des Datenträgerarchivs im zeitlichen Verlauf großen Schwankungen. Eine im wesentlichen vollständige Auslastung der Transportkapazität innerhalb des Datenträgerarchivs wird regelmäßig zu solchen Zeiten erreicht, in denen die routinemäßige Datensicherung der Datenverarbeitungsanlage vorgenommen wird. Da zu diesem Zeitpunkt ein Großteil der sonst zur Verfügung stehenden Daten für die Benutzer nicht zur Verfügung steht und damit die Nutzung der Datenverarbeitungsanlage nur mit Einschränkungen, wenn überhaupt, möglich ist, ist es wünschenswert, diesen Zeitraum möglichst kurz zu halten.

Da für die Datensicherung in der Regel von außen neue bzw. wiederbespielbare Datenträger über die Ein-/Auslagerungsstation eingeschleust werden müssen, häufen sich zu diesen Zeiten die Transportfunktionen, die einen Transport zwischen der Ein-/Auslagerungsstation und den Schreib-/Lesestationen bewerkstelligen.

Da während der restlichen Betriebszeit des Datenträgerarchivs ein möglichst schneller Zugriff auf die vorrätig gehaltenen Datenträger und die darauf vorhandenen Datenbestände im Vordergrund des Interesses steht, ist es notwendig, daß die Datenträgerspeicher in räumlicher Nähe zu den Schreib-/Lesegeräten angeordnet sind, um möglichst kurze Transportwege für die bereits beschriebenen Datenträger zu ermöglichen.

Aus diesem Grund wird die Anordnung der Ein-/Auslagerungsstation innerhalb des Datenträgerarchivs notwendigerweise an einer entfernteren Stelle zu den Schreib-/Lesegeräten angeordnet.

Die vorliegende Erfindung stellt sich ausgehend von dieser Situation die Aufgabe, eine schnelle Verfügbarkeit auch für die bei der Datensicherung notwendigen Datenträger zu ermöglichen.

Diese Aufgabe wird bei einem automatischen Datenträgerarchiv der zuvor beschriebenen Art erfindungsgemäß dadurch gelöst, daß bezüglich der Schreib-/Lesestation ein Zwischenspeicher für Datenträger so zugriffsnah angeordnet wird, daß die Datenträger schneller von dem Zwischenspeicher als von dem Datenträgerspeicher zur Schreib-/Lesestation transportiert werden können.

Vorzugsweise wird dieser Zwischenspeicher direkt neben oder oberhalb der Einführöffnungen für die Datenträger in der Schreib-/Lesestation angeordnet. Diese Zwischenspeicher werden insbesondere mit unbeschriebenen bzw. wiederbeschreibbaren Datenträgern belegt, die in das Datenträgerarchiv über die Ein-/Auslagerungsstation eingeschleust werden.

In besonderen Fällen läßt sich dieser Zwischenspeicher jedoch auch zur Ablage von Datenträgern nutzen, die im statistischen Mittel wesentlich häufiger als andere Datenträger von der Rechenanlage angefordert werden.

Für die Organisation des Datenträgerarchivs bringt dies den Vorteil, daß nunmehr Datenträger, die standardmäßig in Zeiten hoher Auslastung der Handhabungsvorrichtung im Datenträgerarchiv benötigt werden, in Zeiten geringerer Auslastung in direkte Nähe zu den Schreib-/Lesestationen verlagert werden können, beispielsweise die zuvor angesprochenen neu beschreibbaren bzw. wiederbeschreibbaren Datenträger. Damit verkürzt sich die Transportzeit der in den Stoßzeiten am häufigsten benötigten Datenträger von bisher üblichen 15 bis 20 Sekunden auf lediglich 6 bis 8 Sekunden, weshalb bei gleicher Archivgröße beispielsweise der Zeitbedarf für die Datensicherung wesentlich reduziert werden kann oder aber bei konstanter Zeitspanne für die Datensicherung ein umfangreicherer Datenbestand auf Datenträgern gesichert werden kann.

Durch die Anwendung des erfindungsgemäßen Verfahrens wird der sonst übliche Betrieb des Datenträgerarchivs in keiner Weise beeinflußt, da dem Transport der bespielbaren Datenträger von der Ein-/Auslagerungsstation zum Zwischenspeicher die niedrigste Priorität zugeordnet werden kann, so daß diese Transportfunktion durch die Anforderung einer Transportfunktion mit höherer Priorität unterbrochen werden kann, beispielsweise durch die Anforderung eines Datenträgers aus dem Datenträgerspeicher für die Schreib-/Lesestation oder die Anforderung von dessen Rücktransport zum Datenträgerspeicher.

Prinzipiell könnte man zur Durchführung des erfindungsgemäßen Verfahrens auch den den Schreib-/Lesestation nächstliegenden Bereich oder die zunächstliegenden Bereiche als Zwischenspeicher für eingeschleuste wiederbespielbare Datenträger definieren, jedoch sind hier enge räumliche Grenzen gesetzt, weshalb bei dieser Lösung die Kapazität eines solchen Zwischenspeichers sehr limitiert wäre. Im Falle der Verwendung von Drehtürmen beim Aufbau des Datenträgerspeichers kann außerdem nicht sichergestellt werden, daß die Drehturmspeicherbereiche, die in diesem Falle für bespielbare Datenträger zur Verfügung stehen, sich stets in einer für die Handhabungsvorrichtung zugänglichen Stellung befinden, wenn man nicht die Funktion des Drehturms in der Bereitstellung auch anderer Datenträger einschränken möchte.

Zudem wird in der Mehrzahl der Fälle trotz allem noch eine längere Transportzeit notwendig werden, da sich die Anordnung der Datenträgerregale und ebenso der verwendeten Drehtürme auch nach dem Kriterium der guten Raumnutzung richten muß. Die Anordnung eines zusätzlichen Zwischenspeichers für Datenträger benachbart zu der Schreib-/Lesestation erlaubt aber die Ausrichtung des Zwischenspeichers und der darin zu positionierenden Datenträger auf die Ein-/Ausgangsöffnungen der Schreib-/Lesegeräte und eine optimale Anordnung in Bezug auf die Einführöffnungen der Schreib-/Lesegeräte.

Diese spezielle Ausrichtung der Zwischenspeicherpositionen der Datenträger auf die Ein-/Ausgangsöffnungen der Schreib-/Lesestationen bringt aber einen weiteren Zeitvorteil beim Transport der innerhalb einer kurzen Zeitspanne am häufigsten angeforderten Datenträger, typischerweise den beschreibbaren Datenträger für die Datensicherung.

Vorzugsweise sind die Datenträger in dem Zwischenspeicher so positionierbar, daß sie hierin eine im wesentlichen parallele Lage zu der im Schreib-/Lesegerät einnehmen. Damit läßt sich die Bewegung der Datenträger beim Transport vom Zwischenspeicher zum Schreib-/Lesegerät auf ein Minimum reduzieren, insbesondere entfällt eine Drehbewegung der Handhabungsvorrichtung.

Besonders günstig ist es bei dem erfindungsgemäßen Datenträgerarchiv, wenn die Handhabungsvorrichtung längs einer Bahn verfahrbar ist.

Dabei ist zweckmäßigerweise die Bahn so gelegt, daß sie längs der Schreib-/Lesestation und längs des Datenträgerspeichers verläuft.

Ferner ist vorzugsweise zusätzlich noch eine Ein-/Auslagerungsstation vorgesehen.

Eine besonders zweckmäßige Anordnung läßt sich dadurch erreichen, daß die Ein-/Auslagerungsstation an einem Ende der Bahn angeordnet ist.

Hinsichtlich der Anordnung des Zwischenspeichers wurden bislang keine weiteren Angaben gemacht. So hat es sich als besonders zweckmäßig erwiesen, wenn der Zwischenspeicher mitverfahrbar an der Handhabungsvorrichtung angeordnet ist, da in diesem Fall der Zwischenspeicher nicht nur stets zugriffsnah zur Handhabungsvorrichtung und der Schreib-/Lesestation steht, wenn die Handhabungsvorrichtung in diese Station einen Datenträger einlegen will, auch zugriffsnah zur Handhabungsvorrichtung, wenn diese einen Datenträger aus einer Position im Datenträgerspeicher oder in einer Ein-/Auslegestation greifen oder in diesen einlegen will.

Die zugriffsnahe Anordnung des erfindungsgemäßen Zwischenspeichers ist besonders günstig dann gegeben, wenn der Zwischenspeicher im Greifbereich der in einer Zugriffsposition zur Schreib-/Lesestation stehenden Handhabungsvorrichtung angeordnet ist.

Eine weitere bevorzugte Anordnung des erfindungsgemäßen Zwischenspeichers sieht vor, daß dieser über der Schreib-/Lesestation angeordnet ist.

Günstigerweise wird als Handhabungsvorrichtung ein Roboter mit sieben Bewegungsfreiheitsgraden gewählt, wobei ein Freiheitsgrad eine Verfahrbewegung innerhalb des Archivs beinhaltet und drei Freiheitsgrade für Rotationsbewegungen zur Verfügung stehen.

Automatische Datenträgerarchive, die mit dem zuvor vorgestellten erfindungsgemäßen Verfahren betrieben werden, lassen sich während des Betriebs hermetisch von der Umwelt abriegeln. Insbesondere ist es möglich, den Datenträgeraustausch mit der Außenwelt einzig und allein über die Ein-/Auslagerungsstation abzuwickeln und dem Bedienungspersonal den Zugang nur zu Wartungsarbeiten zu ermöglichen. Dies ist insbesondere wegen der hohen Fehlertoleranz des zuvor vorgestellten Verfahrens möglich, so daß ein Optimum an Verfügbarkeit der verwalteten Daten bei gleichzeitiger Datensicherheit und Datenschutz möglich ist. Insbesondere ist eine weitgehende Absicherung der Räumlichkeiten, die der Unterbringung des Datenträgerarchivs dienen, sowie eine ausgezeichnete Zugangskontrolle möglich. Insbesondere läßt sich das erfindungsgemäße automatische Datenträgerarchiv in besonderen Datensicherungsräumen unterbringen, die beispielsweise einen Schutz gegen magnetische Strahlung, einen Schirmschutz gegen die Abstrahlung elektromagnetischer Wellen oder auch gegen elektromagnetische Impulse ergeben.

Die für die Handhabungsvorrichtung notwendige Steuerungseinrichtung kann entweder ein Teil der zentralen Rechenanlage sein oder aber Teil des eigentlichen Datenträgerarchivs. Hierfür eignen sich beispielsweise standardmäßig verfügbare Mikrocomputer oder aber auch in die Handhabungsvorrichtung selbst integrierbare, programmierbare Steuerungen, die mit einem Speicherbereich zum Abspeichern der Datenträgerpositionen im Datenträgerspeicher, d.h. zum Abspeichern und Aktualisieren des Archivspiegels, ausgerüstet sind.

Für den Betrieb eines solchen automatischen Datenträgerarchivs eignet sich beispielsweise folgende Prioritätsstaffelung der Transportfunktionen:
(a) Transportfunktionen mit höchster Priorität:
   Sogenannte Volume-Mounts oder Volume-Keeps, bei denen ein Datenträger aus dem Datenträgerspeicher des Datenträgerarchivs entnommen und von der Handhabungsvorrichtung zur Schreib-/Lesestation transportiert wird bzw. aus der Schreib-/Lesestation entnommen und wieder an den vorgesehenen Platz im Datenträgerspeicher zurückverbracht wird. Parallel hierzu oder alternativ hierzu kann ein sogenannter Scratch-Mount mit der höchsten Priorität ausgestattet werden, bei dem ein bespielbarer Datenträger entweder von dem Zwischenspeicher oder von der Ein-/Auslagerungsstation zum Lesegerät verbracht wird oder aber ein neu beschriebener Datenträger zu einer leeren Position im Datenträgerspeicher verbracht wird.
(b) Transportfunktionen von höherer Priorität:
   Sogenannte Mounts oder Keeps von Reinigungsdatenträgern, die nach vorgegebener Zahl von Volume- oder Scratch-Mounts, gegebenenfalls mit einer gewissen Toleranz bezüglich der Zahl der Vorgänge, in den Schreib-/Lesegeräten eingesetzt werden, um die Schreib-/Leseköpfe der Geräte zu warten.
   Wichtig in diesem Zusammenhang ist, daß über die Benutzung der mehrfach verwendbaren Reinigungsdatenträger Buch geführt wird, und daß diese nach einer maximalen Zahl von Reinigungsläufen automatisch ausgesondert werden.
(c) Mit vergleichbarer, d.h. höherer Priorität
   werden sogenannte Fremddatenträger behandelt, die von anderen Rechenzentren oder Rechenanlagen und Datenträgerarchiven zeitweise zur Verfügung gestellt werden und die nicht in das Datenträgerarchiv integiert werden. Diese Datenträger werden einem vordefinierten Bereich der Ein-/Auslagerungsstation entnommen und zur Schreib-/Lesestation verbracht. Nach dem Gebrauch der Fremddatenträger werden diese wieder in die Ein-/Auslagerungsstation verbracht.
(d) Die niedrigste Priorität
   wird der Transportfunktion von sogenannten Scratch-Datenträgern von der Ein-/Auslagerungsstation zu dem Zwischenspeicher zugewiesen, wobei allerdings diese Transportfunktion zur Dauer- oder Grundfunktion erklärt werden kann, solange bis der Zwischenspeicher mit den Scratch-Datenträgern ausreichend versorgt ist.

Weiterhin ist denkbar, daß eine Reorganisation des Datenträgerarchivs als zusätzliche Grundfunktion ausgeführt werden kann, bei der beispielsweise die Datenträger, die am häufigsten angefordert werden, in den den Schreib-/Lesegeräten nächstgelegenen Positionen der Datenträgerspeicher abgelegt werden.

Neben den eingangs als erfindungswesentlich bezeichneten Verfahrensaspekten sind auch die vorstehend genannten Vorrichtungsaspekte erfindungswesentlich und daher wird auch für diese einzeln und in ihrer Gesamtheit Schutz beansprucht.

Diese und weitere Vorteile werden im folgenden anhand der Zeichnung noch näher erläutert. Es zeigen im einzelnen:
- Fig. 1: eine perspektivische Ansicht eines erfindungsgemäßen Datenträgerarchivs;
- Fig. 2: eine Draufsicht auf ein Datenträgerarchiv;
- Fig. 3: eine beispielhafte Darstellung einer auf einem Datenträger anzubringenden Markierung;
- Fig. 4: ein Ablaufdiagramm für ein bevorzugtes Ausführungsbeispiel des erfindungsgemäßen Verfahrens zur Überprüfung der Kennung eines Datenträgers.
- Fig. 5: Ablaufdiagramm 1 für ein Beispiel einer Transportfunktion mit höchster Priorität;
- Fig. 6: Ablaufdiagramm 2 für ein weiteres Beispiel einer Transportfunktion mit höchster Priorität;
- Fig. 7: Ablaufdiagramm 3 für ein Beispiel einer zweiten Transportfunktion;
- Fig. 8: Ablaufdiagramm 4 für ein weiteres Beispiel einer zweiten Transportfunktion;
- Fig. 9: Ablaufdiagramm 5 einer Transportfunktion höherer Priorität;

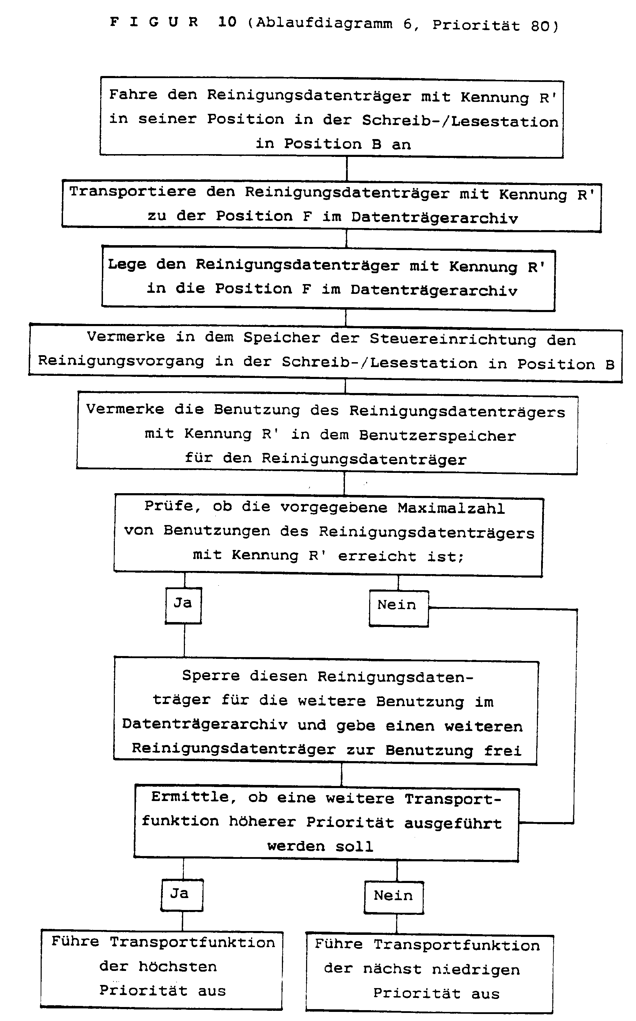

- Fig. 10: Ablaufdiagramm 6 einer weiteren Transportfunktion höherer Priorität;
- Fig. 11: Ablaufdiagramm 7 einer weiteren Transportfunktion höherer Priorität;
- Fig. 12: Ablaufdiagramm 8 einer weiteren Transportfunktion höherer Priorität;
- Fig. 13: Ablaufdiagramm 9 für ein Beispiel einer ersten Transportfunktion;

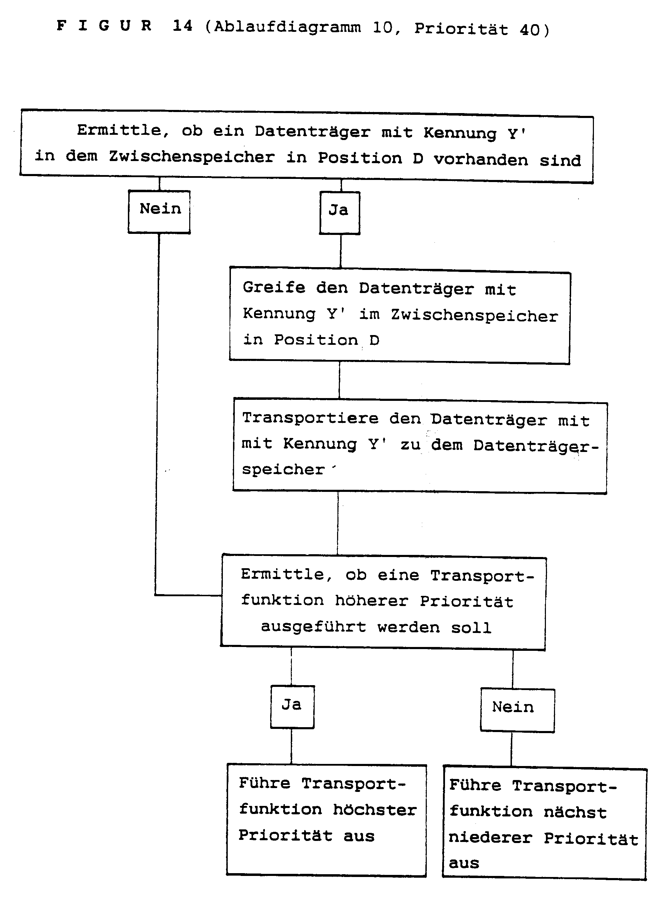

- Fig. 14: Ablaufdiagramm 10 für ein weiteres Beispiel einer ersten Transportfunktion, und
- Fig. 15: Ablaufdiagramm 11 einer Transportfunktion niedrigster Priorität.

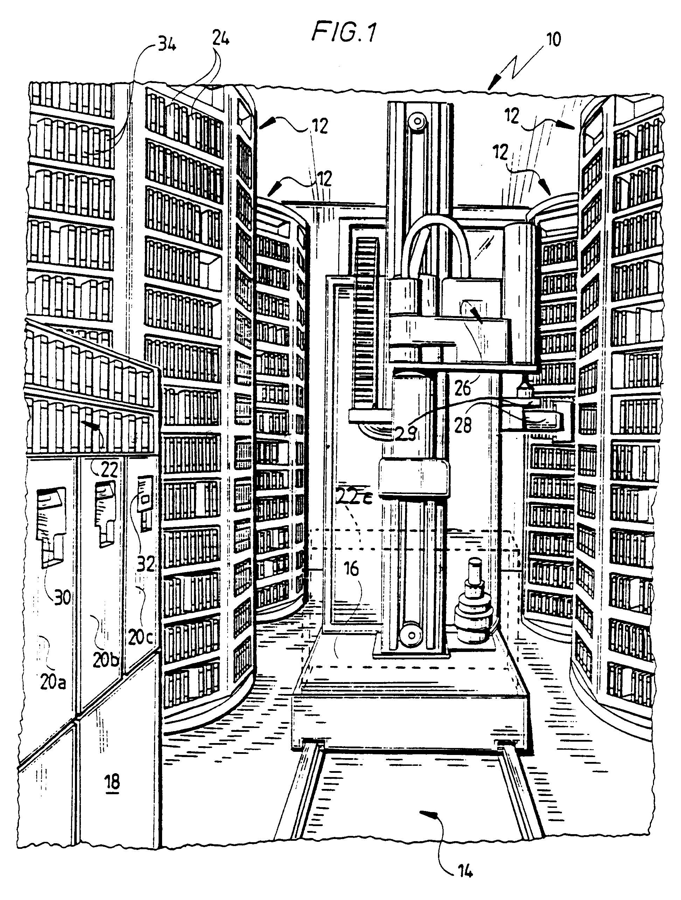

Das in Fig. 1 in perspektivischer Ansicht gezeigte Datenträgerarchiv 10 umfaßt einen aus Drehtürmen 12 aufgebauten Datenträgerspeicher, die beidseits eines Schienenwegs 14 angeordnet sind, welcher eine Verfahrbewegung einer Datenträger-Handhabungsvorrichtung 16 dient. Entlang des Schienenwegs 14 ist dann außerdem noch eine Schreib-/Lesestation 18 für Datenträger angeordnet, die mehrere Datenträgerlaufwerke 20a, b, c umfaßt. Direkt oberhalb der Schreib-/Lesestation 18 ist ein erster Zwischenspeicher 22 für Datenträger angeordnet, in dem insbesondere unbespielte bzw. wiederbespielbare Datenträger für die Datensicherung bereitgehalten werden.

Das in Fig. 1 gezeigte Datenträgerarchiv arbeitet mit als Datenträger dienenden Bandkassetten 24, die in den Drehtürmen 12 mittels Abstandshaltern in definierten Positionen abgestellt sind. Die Handhabungsvorrichtung oder der Roboter 16 weist sieben Freiheitsgrade auf, wobei drei der Freiheitsgrade Rotationsbewegungen zugeordnet sind, die zum einen das Schwenken des Roboteroberteils 26 und des am Roboteroberteil 26 angelenkten Greifers 28 beinhalten. Die beiden Rotationsbewegungen erfolgen bei diesem Datenbandarchiv um parallele Rotationsachsen, da die Bandkassetten 24 in dem Archiv 10 bereits in der Lage abgestellt sind, in der sie in Ein-/Auswurföffnungen 30 der Laufwerke 20a, b, c einzusetzen sind. Die drei Laufwerke 20a, b, c sind in unterschiedlichen Betriebsweisen dargestellt, d.h. die Laufwerke 20a und b beinhalten im dargestellten Zustand keinen Datenträger, während in das Laufwerk 20c ein Datenträger oder eine Bandkassette 24 eingesetzt ist und deshalb die Auswurföffnung 30 über eine Abdeckung 32 verschlossen ist.

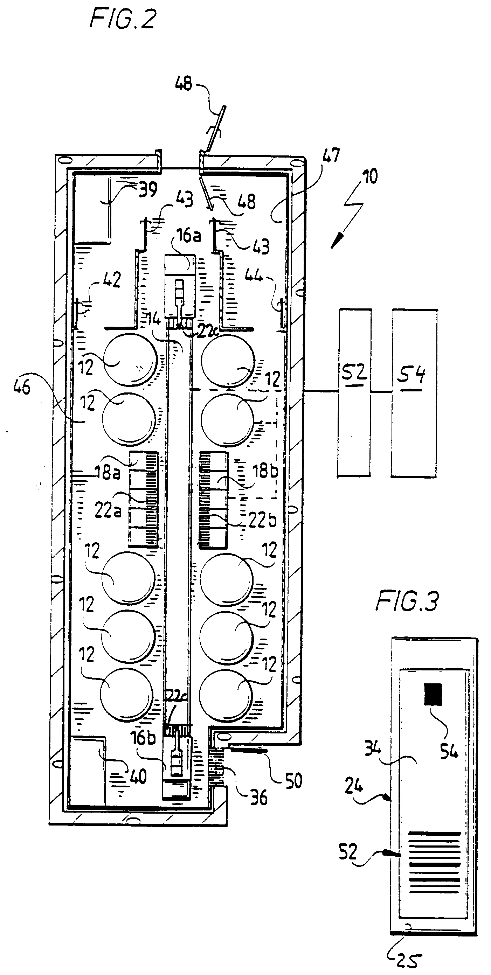

Vorzugsweise sind die Handhabungsvorrichtungen 16 jeweils mit einem zweiten Zwischenspeicher 22c versehen - wie in Fig. 1 gestrichelt und in Fig. 2 in Draufsicht gezeichnet dargestellt -, der mit diesen längs des Schienenwegs 14 gemeinsam verfahrbar ist. Dieser zweite Zwischenspeicher 22c ist somit stets im Greifbereich des Greifers 28.

Die Bandkassetten 24 weisen an einer Schmalseite eine Markierung 34 auf, die vorzugsweise eine optische oder magnetische Information trägt, die von einem entsprechenden Sensor 29 des Greifers 28 abgetastet werden kann (Fig. 3).

Fig. 2 zeigt eine Draufsicht auf ein erfindungsgemäßes Datenträgerarchiv 10, wobei zur Vergrößerung der Handhabungskapazität der Datenträger zwei Roboter 16a und 16b vorgesehen sind. Neben den Drehtürmen 12 für die bereits archivierten Bandkassetten sind bei diesem Datenbandarchiv direkt den Schreib-/Lesestationen 18a und 18b jeweils ein Zwischenspeicher 22a und 22b zugeordnet, die vor allem dem Bereithalten von Leerkassetten bzw. wiederbespielbaren Kassetten 24 dienen, die über eine Ein-/Auslagerungsstation 36 dem Archiv 10 zugeführt werden.

Derartige Datenträgerarchive sind beispielsweise in der US-Patentanmeldung US-A-5 217 345 eingereicht 08/09/89, offenbart.

Klimageräte 39, 40 sorgen für ein gleichmäßiges Temperatur- und Luftbefeuchtungsniveau innerhalb des Datenträgerarchivs 10. Das Archiv 10 ist dabei in zwei mit Türen 41, 42, 43 gegeneinander abschließbare Kammern 46, 47 unterteilt, wobei die Kammer 46 das eigentliche Datenbandarchiv aufnimmt, während die Kammer 47 als Klimaschleuse und/oder als Operatorraum dient. Die Kammer 47 verbindet das Datenbandarchiv über die Doppeltür 48 mit der Außenwelt und erlaubt dem Bedienungspersonal den Zugang zum Datenarchiv für Wartungsarbeiten.

Die Ein-/Auslagerungsstation 36 ist in Form eines Regals ausgebildet und definiert die einzige Ein- bzw. Ausgangsstelle für Datenträger des Datenbandarchivs 10. Im normalen Betrieb wird die Ein-/Auslagerungsstation 36 gegenüber der Außenwelt über eine Tür 50 verschlossen sein.

Das gesamte Datenträgerarchiv wird durch eine in Fig. 2 mit 52 bezeichneten Steuereinrichtung gesteuert, welche sämtliche Informationen über das Datenträgerarchiv gespeichert hat und von einer Großrechenanlage 54 über eine Verbindungsleitung Anforderungen einzelner Datenträger erhält.

Das erfindungsgemäße Datenträgerarchiv erarbeitet nun folgendermaßen:

Angenommen seitens der Großrechenanlage 54 wird an die Steuereinrichtung 52 eine Anforderung weitergegeben, daß ein Datenträger mit der Kennung X aus dem Datenträgerspeicher 12 in die Schreib-/Lesestation 18, beispeilsweise Position B, zu transportieren sei.

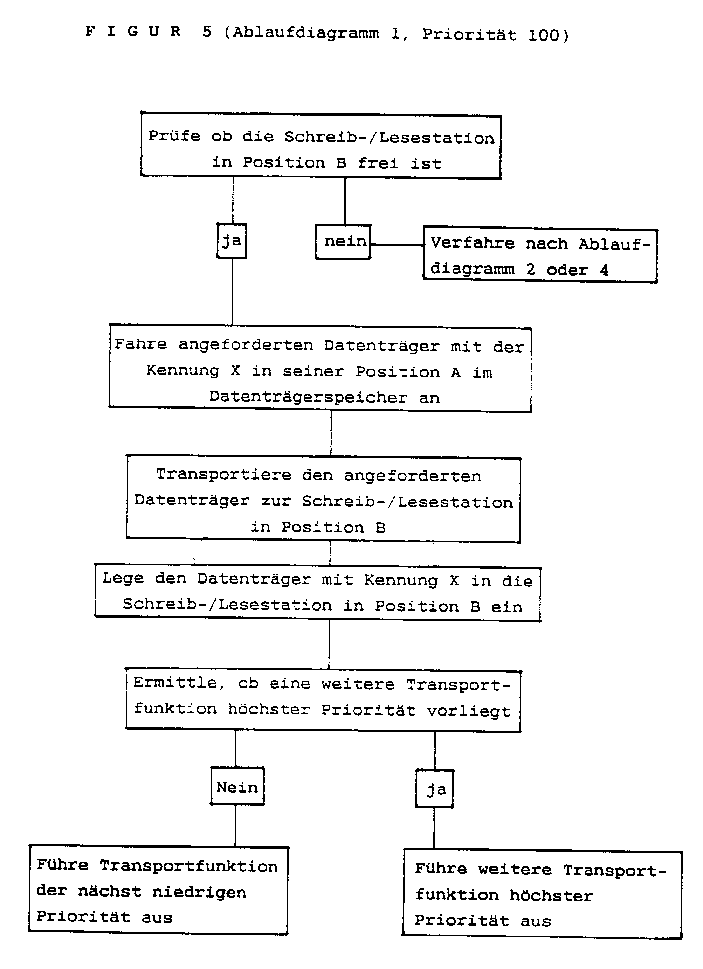

Diese als Beispiel genannte Transportablauf muß kein ausgewählter Transportablauf im Sinne der Ansprüche sein, sondern kann auch ein nicht ausgewählter Transportablauf sein. Allerdings handelt es sich um die unmittelbare Anforderung eines Datenträgers in der Schreib-/Lesestation in Position B, so daß auch dieser Anforderung erfindungsgemäß die höchste Priorität zukommt. Daher ist im Ablaufdiagramm 1 (Fig. 5) bei dieser Transportfunktion die Priorität 100, d.h. die höchst mögliche Priorität, vermerkt.

Gemäß dem erfindungsgemäßen Verfahren wird nun zuerst geprüft, ob die Schreib-/Lesestation in Position B frei ist, d.h. ob in dieser kein Datenträger liegt. Ist dies nicht der Fall, so wird gemäß dem später zu erläuternden Ablaufdiagramm 2 oder dem Ablaufdiagramm 4 verfahren. Ist dies der Fall, so fährt die Handhabungsvorrichtung den angeforderten Datenträger mit Kennung X in der Position A im Datenträgerspeicher an und transportiert diesen in die Schreib-/Lesestation in Position B.

Nach Beendigung dieses Transports wird entsprechend dem erfindungsgemäßen Verfahren ermittelt, ob eine weitere Transportfunktion höchster Priorität vorliegt oder nicht. Ist dies nicht der Fall, so wird die Transportfunktion nächst niedriger Priorität ausgeführt, ist dies der Fall, so wird die weitere Transportfunktion höchster Priorität ausgeführt.

Generell ist bei Vorliegen mehrerer Transportfunktionen höchster oder jeweils gleicher Priorität gemäß dem erfindungsgemäßen Verfahren so vorzugehen, daß diese entsprechend der Ankunft ihrer Anforderung in der Steuereinrichtung 52, d.h. gemäß ihrer zeitlichen Abfolge, abgearbeitet werden.

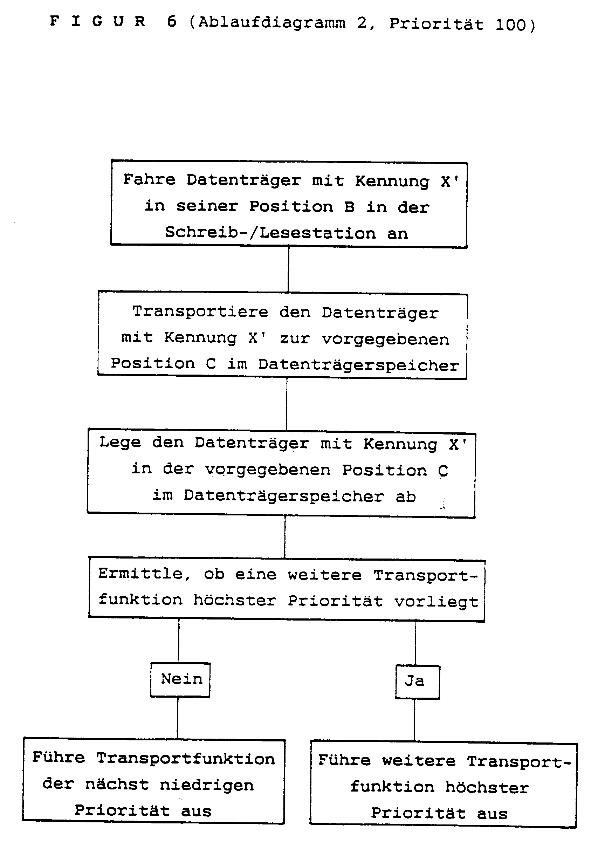

Bei dem Ablaufdiagramm 2 (Fig. 6), das den Transport eines Datenträgers aus einer Schreib-/Lesestation in den Datenträgerspeicher darstellt, handelt es sich ebenfalls nicht um eine ausgewählte Transportfunktion, sondern eine nicht ausgewählte Transportfunktion, die ebenfalls die Priorität 100 aufweist, was insbesondere deshalb notwendig ist, um im Falle eines in einer Schreib-/Lesestation befindlichen Datenträgers, wie in Ablaufdiagramm 1 dargestellt, verfahren zu können, wenn in diese Schreib-/Lesestation ein weiterer Datenträger eingelegt werden soll.

Im übrigen wird im Ablaufdiagramm 2 gemäß Fig. 6 in umgekehrte Weise verfahren wie beim Ablaufdiagramm 1 und ebenfalls am Ende des auszuführenden Transports ermittelt, ob noch eine weitere Transportfunktion höchster Priorität vorliegt, und wenn ja, diese ausgeführt, wenn nein, die nächst niedrige Transportfunktion ausgeführt.

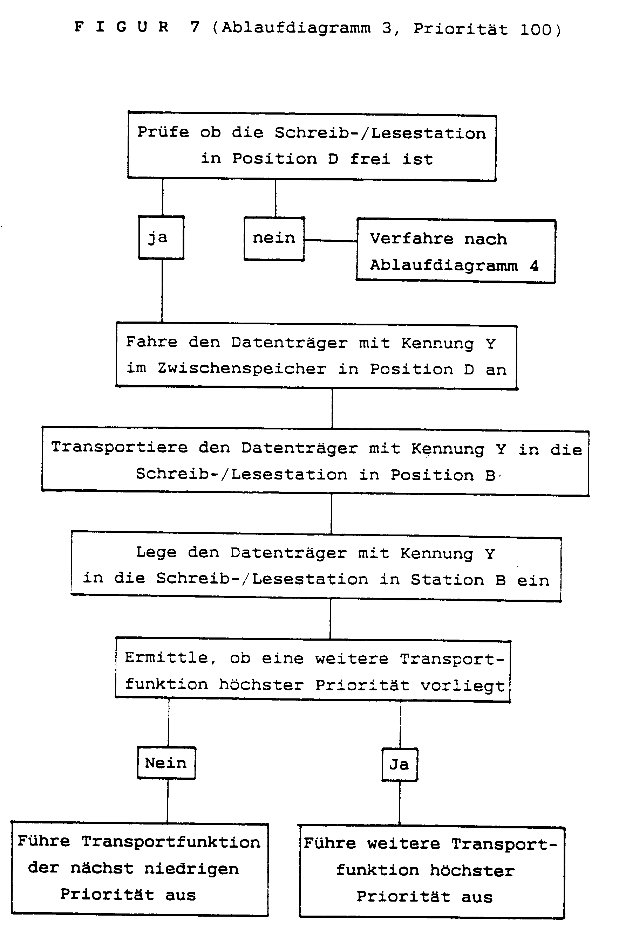

Bei der in Fig. 7, d.h. in Ablaufdiagramm 3, dargestellten Transportfunktion, die ebenfalls die Priorität 100 aufweist, handelt es sich um einen Teil eines ausgewählten Transportablaufs, nämlich um die zweite Transportfunktion desselben, die ebenfalls mit höchster Priorität ausgeführt wird.

Somit wird dann, wenn seitens der Großrechenanlage 54 ein Datenträger in der Schreib-/Lesestation in Position B angefordert wird, zunächst geprüft, ob diese frei ist. Wenn dies nicht der Fall ist, wird diese gemäß dem Ablaufdiagramm 2 oder 4 freigemacht. Ist dies der Fall, so erfolgt der Transport des Datenträgers mit der Kennung Y im Zwischenspeicher in Position B zu der Schreib-/Lesestation in Position B.

Nach Beendigung des Transports wird ebenfalls überprüft, ob eine weitere Transportfunktion höchster Priorität vorliegt und diese gegebenenfalls ausgeführt und es wird die nächst niedrige Transportfunktion ausgeführt.

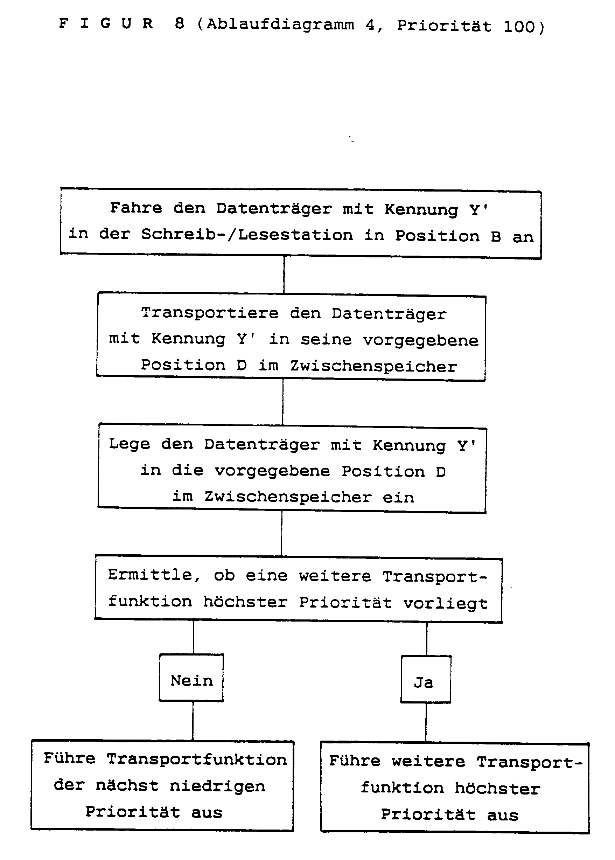

Bei dem in Fig. 8 dargestellten Ablaufdiagramm 4 handelt es sich ebenfalls um eine zweite Transportfunktion, welche einen Teil eines ausgewählten Transportablaufs darstellt, wobei dieser zweiten Transportfunktion - im Gegensatz zur zweiten Transportfunktion gemäß Ablaufdiagramm 3 - keine erste Transportfunktion vorausgeht, sondern eine erste Transportfunktion, d.h. ein Transport vom Zwischenspeicher zu beispielsweise dem Datenträgerspeicher oder der Ein-/Auslagerungsstation nachfolgt.

Auch bei diesem Ausführungsbeispiel gemäß Ablaufdiagramm 4 wird nach Ausführen der Transportfunktion, d.h. des Transports des Datenträgers mit Kennung Y′ in der Schreib-/Lesestation in Position B zum Zwischenspeicher in Position B, ermittelt, ob eine weitere Transportfunktion höchster Priorität vorliegt und wenn ja, diese ausgeführt, wenn nein, die Transportfunktion mit der nächst niedrigen Priorität ausgeführt.

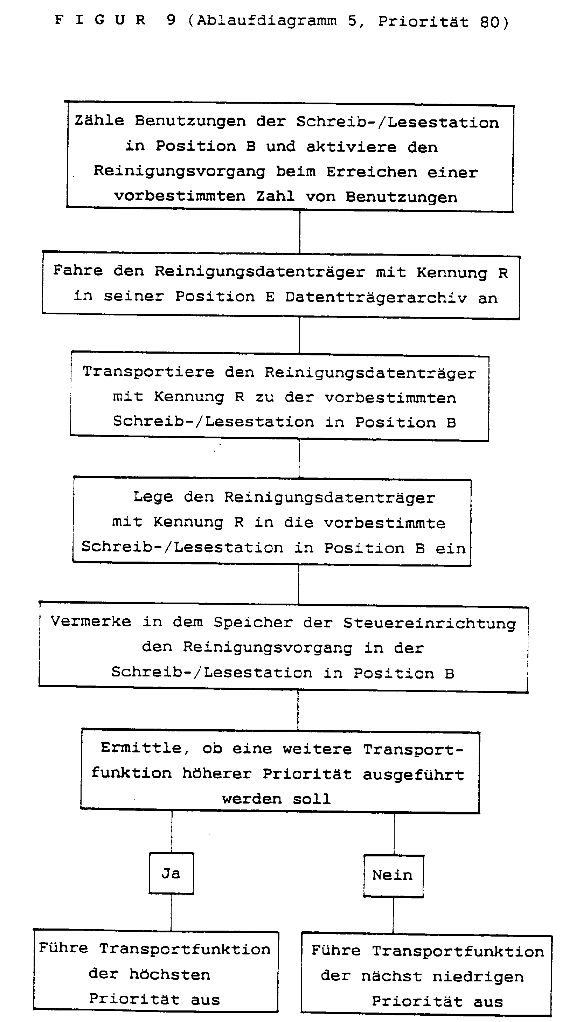

Bei dem in Fig. 9 dargestellten Ablaufdiagramm 5 handelt es sich um eine Transportfunktion, der die Priorität 80 zugeordnet wird, d.h. eine Priorität, die keine höchste Priorität, sondern lediglich noch eine hohe Priorität in der beispielhaft verwendeten Prioritätenliste von 10 bis 100 darstellt.

In dem Ablaufdiagramm 5 der Fig. 9 ist das Einlegen eines Reinigungsdatenträgers mit der Kennung R in die Schreib-/Lesestation in Position B beschrieben, wobei zunächst ständig von der Steuereinrichtung 52 die Benutzungen der Schreib-/Lesestation in Position B gezählt werden und dann nach Erreichen der vorgegebenen Zahl von Benutzungen der Reinigungsvorgang aktiviert wird, welcher die in Ablaufdiagramm 5 dargestellte Transportfunktion hoher Priorität auslöst.

Diese Transportfunktion transportiert den Reinigungsträger mit der Kennung R aus seiner Position E im Datenträgerarchiv zu der Schreib-/Lesestation in Position B.

Aufgrund der Tatsache, daß diese Transportfunktion lediglich eine hohe Priorität, jedoch nicht die höchste Priorität aufweist, kann es vorkommen, daß diese Transportfuntion nicht jeweils zur genau exakten Zeit durchgeführt wird, sondern lediglich dann, wenn keine Transportfunktion höchster Priorität, also keine der Transportfunktion gemäß der Ablaufdiagramme 1 bis 4, vorliegt.

Am Ende der Transportfunktion gemäß Ablaufdiagramm 5 wird dann ebenfalls überprüft, ob eine Transportfunktion höherer Priorität ausgeführt werden soll, und wenn keine derartige vorliegt, eine Transportfunktion nächst niederer Priorität ausgeführt.

Die Transportfunktion gemäß Ablaufdiagramm 6 hat dieselbe Priorität wie die gemäß Ablaufdiagramm 5 und hat das Zurücktransportieren des Reinigungsdatenträgers mit der Kennung R′ in die Position F im Datenträgerarchiv zum Gegenstand.

Dieses Zurücktransportieren des Reinigungsdatenträgers erfolgt mit genau der umgekehrten Verfahrensweise wie in Ablaufdiagramm 5 dargestellt. Allerdings wird als zusätzliches Merkmal die Benutzung des Reinigungsdatenträgers mit der Kennung R′ in den Benutzerspeicher für denselben vermerkt und gleichzeitig abgeprüft, ob die vorgegebene Maximalzahl von Benutzungen dieses Reinigungsdatenträgers erreicht ist.

Ist dies der Fall, so wird der Reinigungsdatenträger mit Kennung R′ für die weitere Benutzung im Datenträgerarchiv gesperrt und ein weiterer Reinigungsdatenträger zur Benutzung freigegeben.

Im Anschluß daran wird ermittelt, ob eine Transportfunktion höherer Priorität ausgeführt werden soll, oder ob zu einer Transportfunktion der niedrigen Priorität übergegangen werden kann.

Ist die Maximalzahl von Benutzungen des Reinigungsdatenträgers mit der Kennung R′ nicht erreicht, so wird unmittelbar zur Ermittlung der Tatsache gesprungen, ob eine weitere Transportfunktion höherer Priorität ausgeführt werden soll oder nicht.

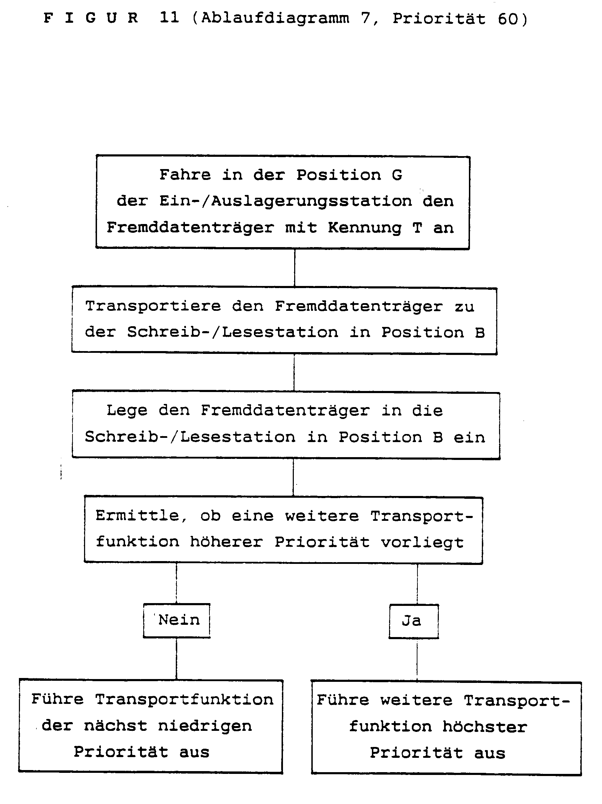

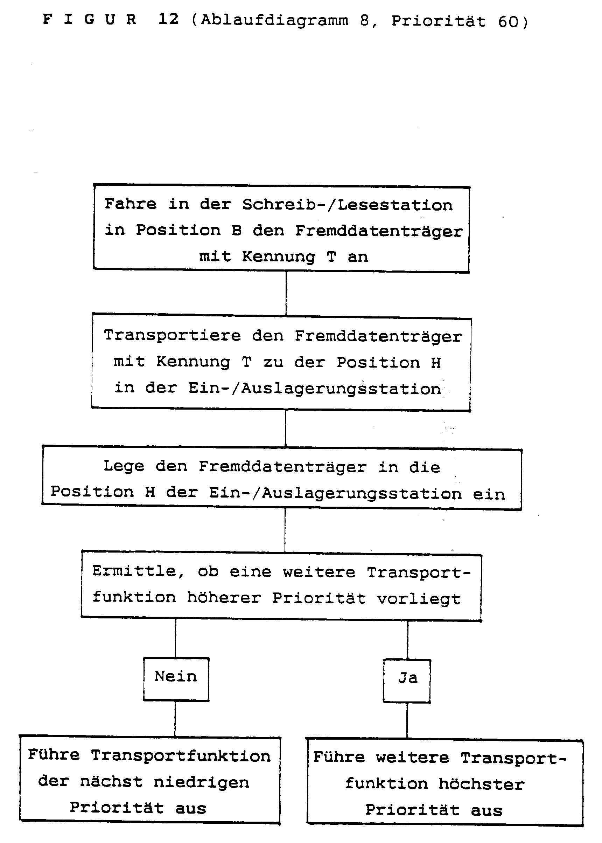

Soll ein in der Ein-/Auslagerungsstation deponierter Fremddatenträger in dem erfindungsgemäßen Datenträgerarchiv gelesen werden, so werden die in Fig. 11 und 12 dargestellten Transportfunktion gemäß den Ablaufdiagrammen 7 oder 8 ausgeführt, die ebenfalls-eine hohe Priorität haben, jedoch beispielsweise nachrangig zu den Transportfunktionen gemäß der Ablaufdiagramme 5 und 6 eingeordnet sind.

Nach dem Transport des Fremddatenträgers mit der Kennung T zu einer Schreib-/Lesestation in Position B, gemäß dem Diagramm 7 oder dem Rücktransport von dieser Schreib-/Lesestation in Position B zu der Ein-/Auslagerungsstation, wird jeweils ermittelt, ob eine weitere Transportfunktion höherer Priorität vorliegt, und wenn ja, diese ausgeführt, wenn nein, wird zu der Transportfunktion mit der nächst niederen Priorität übergegangen.

Alternativ kann aber auch der Transport eines Datenträgers von der Ein-/Auslagerungsstation zu der Schreib-/Lesestation als Transportfunktion mit höchster Priorität durchgeführt werden, nämlich dann, wenn die Information des Fremddatenträgers unmittelbar von der Großrechenanlage 54 angefordert wird und es sich nicht lediglich um ein, von dem Betrieb der Großrechenanlage 54 unabhängiges Übertragen der Information dieses Fremddatenträgers auf einen Datenträger des Datenträgerarchivs handelt, was bei der Festlegung der Priorität der Transportfunktionen gemäß den Diagrammen 7 und 8 zugrundegelegt wurde.

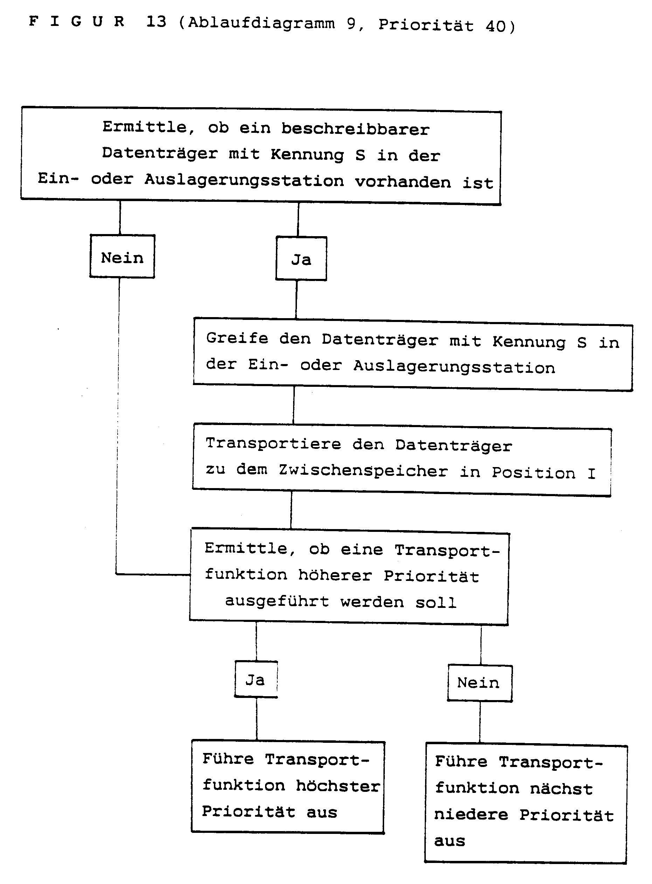

Das in Fig. 13 dargestellte Ausführungsbeispiel einer erfindungsgemäßen ersten Transportfunktion, welcher eine niedrige Priorität zugeordnet ist, betrifft beispielsweise das Einlagern von beschreibbaren Datenträgern von der Ein-/Auslagerungsstation in das Datenträgerarchiv.

Derartige bespielbare Datenträger - beispielsweise mit der Kennung S versehen - werden in der Ein-/Auslagerungsstation dem erfindungsgemäßen Datenträgerarchiv zugeführt und beispielsweise dazu verwendet, die von der Großrechenanlage 54 angeforderten Sicherungskopien für die Plattenlaufwerke der Großrechenanlage zu tätigen.

Diese beispielhafte Transportfunktion ermittelt, ob ein beschreibbarer Datenträger mit der Kennung S in der Ein-/Auslagerungsstation vorhanden ist und wenn ja, wird dieser Datenträger mit der Kennung S in der Ein-/Auslagerungsstation gegriffen und zu dem Zwischenspeicher in die Position I transportiert und am Ende wird wiederum ermittelt, ob eine Transportfunktion höherer oder niederer Priorität ausgeführt werden soll.

Wenn keine Anforderungen seitens der Großrechenanlage 54 für Datenträger vorliegen, werden gemäß dem erfindungsgemäßen Verfahren vorzugsweise die für die Datensicherung benötigten Datenträger 24 in Zeiten geringer Beanspruchung der Roboter 16a und 16b aus der Ein-/Auslagerungsstation 36 entnommen und in den Zwischenspeichern 22a und 22b abgelegt, wie dies im Ablaufdiagramm der Figur beschrieben. Diese Transportfunktion ist mit niedriger Priorität ausgestattet und wird beispielsweise solange ausgeführt, als sich in der Ein-/Auslagerungsstation 36 noch Datenträger für die Datensicherung befinden.

In gleicher Weise wie der Transport eines bespielbaren Datenträgers von der Ein-/Auslagerungsstation zu dem Zwischenspeicher gemäß dem Ablaufdiagramm 9 kann aber auch ein, beispielsweise seitens der Steuereinrichtung 52, freigegebener Datenträger in irgend einer anderen Position im Datenträgerspeicher durch die in Fig. 9 dargestellte erste Transportfunktion zu dem Zwischenspeicher transportiert wird.

Die in Ablaufdiagramm 9 der Fig. 13 dargestellte erste Transportfunktion ist beispielsweise eine der zweiten Transportfunktion gemäß Ablaufdiagramm 3 vorausgehende erste Transportfunktion.

Eine weitere erste Transportfunktion ist in Ablaufdiagramm 10 dargestellt. Bei dieser handelt es sich vorzugsweise um eine der zweiten Transportfunktion gemäß Ablaufdiagramm 4 nachfolgende erste Transportfunktion, d.h. einem Entfernen des Datenträgers mit der Kennung Y′ aus dem Zwischenspeicher.

Es sind aber auch weitere Varianten von, gemäß Ablaufdiagramm 10, ausgestatteten ersten Transportfunktion denkbar, beispielsweise Transport eines Datenträgers aus dem Zwischenspeicher zu der Ein-/Auslagerungsstation.

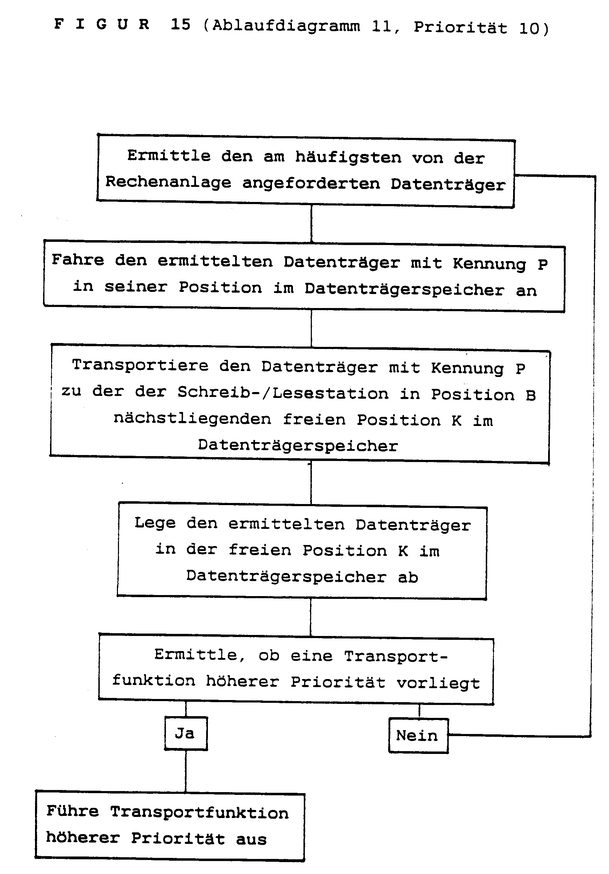

Als Dauerfunktion wird gemäß dem erfindungsgemäßen Verfahren jeweils so vorgegangen, daß die Transportfunktion gemäß Ablaufdiagramm 11 (Fig. 15) durchgeführt wird. Bei dieser Transportfunktion handelt es sich um ein Umsortieren des Datenträgerspeichers 12, in der Weise, daß die am häufigsten von der Großrechenanlage angeforderten Datenträger in den Datenträgerspeicher so umsortiert werden, daß diese den Schreib-/Lesestationen möglichst benachbart und somit möglichst naheliegend angeordnet sind.

Dieses Umsortieren wird ständig dann ausgeführt, wenn keine weiteren Anforderungen für Datenträger seitens der Großrechenanlage vorliegen und auch sämtliche ersten Transportfunktionen ausgeführt sind. Gemäß dem in Fig. 15 dargestellten Ablaufdiagramm 11 wird bei der Dauerfunktion ständig der Datenträgerspeicher so umsortiert, daß letztendlich alle häufig benötigten Datenträgerspeicher auf möglichst kurzem Wege von der Handhabungsvorrichtung erreichbar sind.

Wird der Steuereinrichtung 52 des Datenträgerarchivs während des Ablaufs der Dauerfunktion eine Anforderung eines Datenträgers 24 aus einem der Drehtürme 12 übermittelt, so wird die Dauerfunktion unterbrochen und der vorrangige Transport des Datenträgers vom Speicher zur Lesestation ausgeführt.

Zur beispielhaften Beschreibung der erfindungsgemäßen Verfahrensweise unter Darstellung eines Zugriffs des Greifers 28 zu einem Datenträger mit Berücksichtigung der Markierung 34 und aller Kennungen wird entsprechend dem erfindungsgemäßen Verfahren davon ausgegangen, daß die Großrechenanlage 54 an die Steuereinrichtung 52 des Datenträgerarchivs die Anforderung weitergibt, daß sie den Inhalt des Datenträgers mit der Kennung X benötigt.

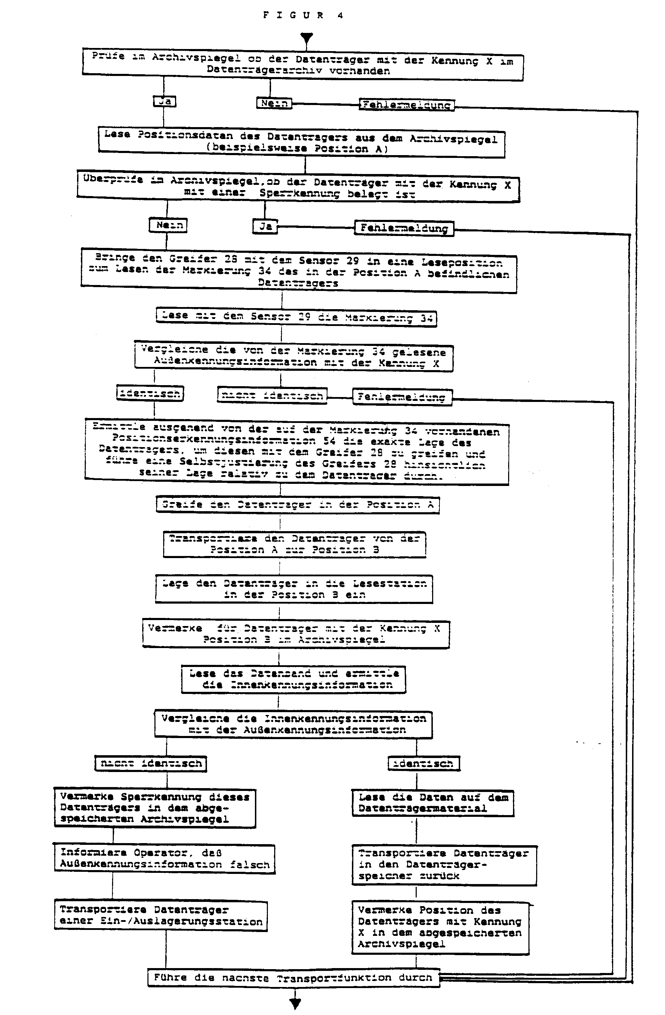

In diesem Fall werden von der Steuereinrichtung 52 gemäß dem erfindungsgemäßen Verfahren die in dem Ablaufdiagramm in Fig. 4 dargestellten einzelnen Schritte durchgeführt.

D.h., daß als erster Schritt geprüft wird, ob im Archivspiegel der Steuereinrichtung 52 der Datenträger mit der Kennung X als ein im Datenträgerarchiv vorhandener Datenträger vermerkt ist.

Ist dies nicht der Fall, so wird sofort eine Fehlermeldung herausgegeben und die nächste Transportfunktion durchgeführt.

Ist dies der Fall, dann liest die Steuereinrichtung 52 aus dem Archivspiegel die Positionsdaten des Datenträgers heraus. Dies zeigt beispielsweise die Position A in einem der Drehtürme 12 des Datenträgerspeichers.

Als nächstes überprüft die Steuereinrichtung 52, ob in dem Archivspiegel noch eine Sperrkennung für den Datenträger mit der Kennung X vermerkt ist.

Ist dies der Fall, so wird eine Fehlermeldung herausgegeben, ist dies nicht der Fall, so wird von der Steuereinrichtung 52 eine Transportfunktion, d.h. ein gesamtes Programm aufgerufen, welche die Handhabungsvorrichtung mit dem Greifer 28 verfährt und so gemäß den im Archivspiegel abgelegten Positionsdaten des Datenträgers mit der Kennung X so positioniert, daß der Sensor 29 in eine Leseposition zum Lesen der Markierung 34 des in der Position A befindlichen Datenträger in der Lage ist. Diese Leseposition ist für die Steuereinrichtung 52 bei Kenntnis der Positionsdaten automatisch errechenbar, da die Markierung 34 jeweils nur an einer festgelegten Stelle der Datenträgerhülle 25 angebracht ist.

Zur Entnahme der Datenträger 24 aus dem Datenträgerspeicher, d.h. den Drehtürmen 12, wird mittels des am Greifer 28 angebrachten Sensors 29 zunächst die Markierung 34 auf der Datenträgerhülle 25 gelesen und so über die Außenkennungsinformation die Identität des Datenträgers festgestellt.

Fig. 3 zeigt beispielhaft eine auf einen Datenträger aufgebrachte Markierung 34 mit einer optisch aufgezeichneten Information in Form eines Barcodes 52, dessen Markierungselemente gegenüber einem Hintergrund schwächer reflektierende Streifen sind. Diese Markierung 34 wird vorzugsweise an einer Schmalseite des Datenträgers 24 aufgebracht.

Die Steuereinrichtung 52 steuert nun die Handhabungseinrichtung so, daß der Sensor 29 die Markierung vollständig lesen kann.

Zunächst wird die Markierung 34 so gelesen, daß die Außenkennung der Steuereinrichtung 52 zugänglich ist, die diese dann mit der Kennung X vergleicht. Dieser Vergleich ist notwendig, damit die Steuereinrichtung weiß, daß die Handhabungseinrichtung nicht zu dem falschen Datenträger gefahren ist.

Ist die Außenkennung mit der Kennung X nicht identisch, so wird eine Fehlermeldung abgegeben, und die nächste Transportfunktion durchgeführt.

Ist die Außenkennung mit der Kennung X identisch, so wird der Sensor 29 weiter so gesteuert, daß er eine Positionserkennung des Datenträgers durchführt. Hierzu enthält der Datenträger noch die Positionserkennungsinformation, beispielsweise in Form eines rechteckigen Punktes als Markierungselement, die von dem Handhabungsgerät 16 zur Ermittlung der exakten Position des Datenträgers 24 in seiner Speicherposition genutzt wird. Mit Hilfe dieser Positionserkennung wird eine Selbstjustierung des Systems durchgeführt.

Mit dieser Vorgehensweise wird zuverlässig vermieden, daß ein undefiniertes Ergreifen bzw. auch Einsetzen der Datenträger sowohl in den Datenträgerspeicher als auch in die Schreib-/Lesegeräte erfolgt, oder ein Datenträger aufgrund einer unzureichenden Erfassung durch den Greifer 28 während des Transports verloren wird.

Das Handhabungsgerät 16 greift nun den Datenträger in der Position A und transportiert den Datenträger von der Position A zur Position B, in welcher er dann in die Lesestation in der Position B eingelegt wird.

Darüberhinaus vermerkt die Steuereinrichtung 52 noch für den Datenträger mit der Kennung X im Archivspiegel, daß dieser Datenträger sich nun in der Position B befindet.

Nach dem Einlegen des Datenträgers in die Lesestation in der Position B, beispielsweise die Lesestation 18a oder die Lesestation 18b wird die auf dem Datenträgermaterial, d.h. dem Datenträgerband, selbst aufgebrachte Innenkennung durch Abspielen des Datenträgerbands gelesen und mit der auf der Datenträgerhülle angebrachten und beim Greifen des Datenträgers bereits gelesenen Außenkennung verglichen.

Sind die Innenkennung und die Außenkennung nicht identisch, so wird der betreffende Datenträger für den weiteren Gebrauch im Datenträgerarchiv gesperrt.

Dies erfolgt einmal dadurch, daß eine Sperrkennung dieses Datenträgers in dem Archivspiegel vermerkt wird.

Darüberhinaus wird eine Meldung an den Operator weitergegeben, daß die Außenkennungsinformation des in die Lesestation in der Position B eingelegten Datenträgers falsch ist. Schließlich wird auch noch der Datenträger in eine Ein-/Auslagerungsstation befördert und somit für die Änderung der Markierung auf der Datenträgerhülle 24 bereitgehalten.

Alternativ dazu ist es auch denkbar, den Datenträger nicht zu der Ein-/Auslagerungsstation zu befördern, sondern zurück in den Datenträgerspeicher und dort zu lagern, bis der Datenträger aus dem Datenträgerspeicher entnommen und korrigiert werden soll. Probleme treten mit dieser Lagerung im Datenträgerspeicher deshalb nicht auf, da die Sperrkennung im Archivspiegel vermerkt ist und jeweils vor dem Durchführen eines Transports eines Datenträgers von dem Datenträgerspeicher zu einer Schreib-/Lesestation abgeprüft wird, ob der nunmehr zu transportierende Datenträger mit einer Sperrkennung belegt ist oder nicht und im Falle einer Sperrkennung bereits eine Fehlermeldung abgegeben und die nächste Transportfunktion durchgeführt wird, so daß keine zeitintensiven Fehltransporte von Datenträgern mehr erfolgen.

Ist die Innenkennung mit der Außenkennung identisch, so liest die Lesestation beispielsweise die Daten auf dem Datenträgermaterial, d.h. dem Datenband.

Anschließend, nach Beendigung des Lesens, wird der Datenträger zurück in den Datenträgerspeicher transportiert, wobei die Steuereinrichtung 52 noch die Position des Datenträgers mit der Kennung X in den Datenträgerspeicher dadurch vermerkt, daß diese in dem Archivspiegel festhält.

In jedem Fall wird nachdem der Datenträger wieder, entweder in die Ein-/Auslagerungsstation oder in den Datenträgerspeicher, zurücktransportiert wurde, in die nächste Transportfunktion oder alternativ dazu wieder in die Grundfunktion übergegangen.

Die Störsicherheit des Betriebs des erfindungsgemäßen Datenarchivs 10 wird dadurch verbessert, daß die Abspeicherung der einzelnen Datenträgerpositionen innerhalb des Datenträgerarchivs, insbesondere innerhalb des Datenträgerspeichers, sowohl in der zentralen Rechenanlage als auch in der dem Archiv zugehörigen Steuerung in Form des vorzugsweise in einem Speicher derselben vorgesehenen Archivspiegels durchgeführt wird. Die redundante Behandlung des Archivspiegels, sowohl im Speicher der Rechenanlage als auch im Speicher der Steuerung, gewinnt insbesondere dann an Bedeutung, wenn eine direkte Verbindung zwischen der zentralen Rechenanlage und dem Datenarchiv 10 abreißt, wobei dann die Möglichkeit vorgesehen ist, daß die zentrale Rechenanlage über einen anderen Kanal die Informationen an das Archiv übermittelt, beispielsweise über das Ausdrucken von Anforderungslisten, deren Inhalt dann vom Operator über die Konsole der Steuerungsvorrichtung mitgeteilt wird. In diesem Notbetrieb werden die Archivspiegel in der zentralen Rechenanlage und in der Steuerung getrennt und ohne Rückmeldung, wie sie sonst bei einem erfolgreichen Transfer von Kassetten erfolgt, weitergeführt.

Sobald die direkte Verbindung zwischen Steuerung und zentraler Rechenanlage wieder hergestellt ist, kann ein Abgleich der Archivspiegel stattfinden, wobei dann von der zentralen Rechenanlage eine Befehls- oder Anforderungsliste erstellt werden kann, die zu einer Angleichung der Archivspiegel in der Wiederanlaufphase führt.

Mit diesen Maßnahmen wird ein Maximum an Fehlertoleranz im Betrieb des Datenträgerarchivs 10 erreicht, bei gleichzeitiger Maximierung der Verfügbarkeit der im Archiv vorhandenen Daten für die zentrale Rechenanlage.

## Patentansprüche

1. Verfahren zum Betreiben eines einer Rechenanlage als Datenspeicher zugeordneten automatischen Datenträgerarchivs, wobei Datenträger durch von einer Steuereinrichtung des Datenträgerarchivs durchgeführte Transportabläufe einer Handhabungsvorrichtung für die Datenträger zwischen verschiedenen Stationen des Datenträgerarchivs hin- und hertransportiert werden, wobei die Stationen des Datenträgerarchivs mindestens einen Datenträgerspeicher und eine Schreib-/Lesestation für die Datenträger umfassen,
**dadurch gekennzeichnet**,
daß jeder Transportablauf durch mindestens eine Transportfunktion durchgeführt wird, daß jeder Transportfunktion eine Priorität zugeordnet wird, daß eine Transportfunktion mit höherer Priorität vorrangig gegenüber einer Transportfunktion mit niedriger Priorität durchgeführt wird und daß bei Anforderung eines Datenträgers in der Schreib-/Lesestation durch die Rechenanlage mindestens der unmittelbare Transport zwischen der Schreib-/Lesestation und einer weiteren der Stationen mit einer Transportfunktion mit höchster Priorität durchgeführt wird.

2. Verfahren nach Anspruch 1, dadurch gekennzeichnet, daß eine erste Transportfunktion vorgesehen wird, bei welcher ein Transport eines der Datenträger zwischen dem Datenträgerspeicher und einem der Schreib-/Lesestation zugriffsnah angeordneten Zwischenspeicher erfolgt, daß der ersten Transportfunktion eine niedere Priorität zugeordnet wird, daß eine zweite Transportfunktion vorgesehen wird, bei welcher ein Transport eines der Datenträger zwischen den Zwischenspeichern und der Schreib-/Lesestation erfolgt, daß ausgewählte Transportabläufe vor oder nach deren Anforderung durch die Rechenanlage durch die erste Transportfunktion vorbereitet oder abgeschlossen werden und daß bei Anforderung eines ausgewählten Transportablaufs durch die Rechenanlage nur die zweite Transportfunktion mit höchster Priorität durchgeführt wird.

3. Verfahren nach einem der voranstehenden Ansprüche, dadurch gekennzeichnet, daß ein häufig benötigter Transport eines Datenträgers von dem Datenträgerspeicher zu der Schreib-/Lesestation in zwei Transportfunktionen unterteilt wird, daß die erste Transportfunktion den Transport der patenträger zwischen dem Datenträgerspeicher und einem Zwischenspeicher und die zweite Transportfunktion den Transport der Datenträger zwischen dem Zwischenspeicher und der Schreib-/Lesestation betrifft, daß der Zwischenspeicher für die Handhabungsvorrichtung zugriffsnah zur jeweiligen Schreib-/Lesestation angeordnet wird, daß der ersten Transportfunktion eine niedrige Priorität und der zweiten Transportfunktion eine hohe Priorität zugeordnet wird.

4. Verfahren nach einem der voranstehenden Ansprüche, dadurch gekennzeichnet, daß ein lange Fahrwege der Handhabungsvorrichtung erfordernder Transport eines Datenträgers von dem Datenträgerspeicher zu der Schreib-/Lesestation in zwei Transportfunktionen unterteilt wird, daß die erste Transportfunktion den Transport der Datenträger zwischen dem Datenträgerspeicher und einem Zwischenspeicher und die zweite Transportfunktion den Transport der Datenträger zwischen dem Zwischenspeicher und der Schreib-/Lesestation betrifft, daß der Zwischenspeicher für die Handhabungsvorrichtung zugriffsnah zur jeweiligen Schreib-/Lesestation angeordnet wird, daß der ersten Transportfunktion eine niedrige Priorität und der zweiten Transportfunktion eine hohe Priorität zugeordnet wird.

5. Verfahren nach Anspruch 2, dadurch gekennzeichnet, daß der ausgewählte Transportablauf ein vorhersehbarer Transportablauf eines Datenträgers von oder zu der Schreib-/Lesestation ist.

6. Verfahren nach einem der voranstehenden Ansprüche, dadurch gekennzeichnet, daß im Falle eines in einer Schreib-/Lesestation befindlichen Datenträgers vor einem Transport eines weiteren Datenträgers zu dieser Schreib-/Lesestation ein Entfernen des in dieser befindlichen Datenträgers vor dem Transport des weiteren Datenträgers erfolgt.

7. Verfahren nach einem der Ansprüche 2 bis 6, dadurch gekennzeichnet, daß das Entfernen des Datenträgers in Form eines ausgewählten Transportablaufs erfolgt.

8. Verfahren nach einem der voranstehenden Ansprüche, dadurch gekennzeichnet, daß als weitere Station eine Ein-/Auslagerungsstation vorgesehen wird.

9. Verfahren nach Anspruch 8, dadurch gekennzeichnet, daß die Transportabläufe unter Einbeziehung der Schreib-/Lesestation entsprechend den im Fall des Datenträgerspeichers durchgeführten Transportabläufen erfolgen.

10. Verfahren nach einem der Ansprüche 2-9, dadurch gekennzeichnet, daß der Zwischenspeicher als zugriffsnaher Bereich des Datenträgerspeichers definiert wird.

11. Verfahren nach einem der Ansprüche 2-10, dadurch gekennzeichnet, daß der Zwischenspeicher über den Schreib-/Lesestationen angeordnet wird.

12. Verfahren nach einem der Ansprüche 2-10, dadurch gekennzeichnet, daß der Zwischenspeicher mit der Handhabungsvorrichtung mitverfahren wird.

13. Verfahren nach einem der Ansprüche 2-12, dadurch gekennzeichnet, daß der Zwischenspeicher im Greifbereich der in einer Zugriffsposition zur Schreib-/Lesestation stehenden Handhabungsvorrichtung angeordnet wird.

14. Verfahren nach einem der voranstehenden Ansprüche, dadurch gekennzeichnet, daß die Handhabungsvorrichtung zum Ausführen von Transportabläufen längs einer längsseits der Schreib-/Lesestation und des Datenträgerspeichers verlaufenden Bahn verfahren wird.

15. Verfahren nach Anspruch 14, dadurch gekennzeichnet, daß die Handhabungsvorrichtung zum Ausführen der ersten Transportfunktion längs der Bahn verfahren wird.

16. Verfahren nach Anspruch 14 oder 15, dadurch gekennzeichnet, daß die Handhabungsvorrichtung zum Ausführen der zweiten Transportfunktion auf der Bahn stehenbleibt.

17. Verfahren nach einem der voranstehenden Ansprüche, dadurch gekennzeichnet, daß die Steuereinrichtung die Transportfunktion mit niedriger Priorität, insbesondere die erste Transportfunktion, bedarfsweise in regelmäßigen Zeitabständen selbsttätig auswählt.

18. Verfahren nach einem der voranstehenden Ansprüche, dadurch gekennzeichnet, daß eine Transportfunktion mit niedriger Priorität zum Einlagern beschreibbarer Datenträger in den Zwischenspeicher verwendet wird.

19. Verfahren nach einem der voranstehenden Ansprüche, dadurch gekennzeichnet, daß einer Transportfunktion zur Überprüfung der Verfügbarkeit einzelner Datenträger im Datenträgerspeicher eine niedrige Priorität zugeordnet wird.

20. Verfahren nach einem der voranstehenden Ansprüche, dadurch gekennzeichnet, daß einer Transportfunktion zum Umschichten der Datenträger innerhalb des Datenträgerspeichers niedrige Priorität zugewiesen wird.

21. Verfahren nach einem der voranstehenden Ansprüche, dadurch gekennzeichnet, daß ein Einlegen eines Reinigungsdatenträgers mit einer Transportfunktion durchgeführt wird, deren Priorität niedriger ist als die höchste Priorität.

22. Verfahren nach einem der Ansprüche 18 bis 21, dadurch gekennzeichnet, daß die Transportfunktion mit niedrigster Priorität im Dauerbetrieb, gegebenenfalls unterbrochen durch Transportfunktionen höherer Priorität, durchgeführt wird.

23. Verfahren nach Anspruch 22, dadurch gekennzeichnet, daß neben der Transportfunktion niedrigster Priorität eine weitere Funktion mit nächsthöherer Priorität für einen bedarfsweisen Dauerbetrieb vorgesehen wird.

24. Verfahren nach einem der voranstehenden Ansprüche, dadurch gekennzeichnet, daß die Zuordnung der Prioritäten zu den einzelnen Transportfunktionen während des Betriebs des Archivs geändert wird.

25. Verfahren nach einem oder mehreren der voranstehenden Ansprüche, dadurch gekennzeichnet, daß die zu transportierenden Datenträger vor der Entnahme aus dem Datenspeicher über eine von außen abtastbare Markierung identifiziert werden.

26. Verfahren nach Anspruch 25, dadurch gekennzeichnet, daß als Markierungen optische und/oder magnetische Kennungsträger verwendet werden.

27. Verfahren nach einem oder mehreren der voranstehenden Ansprüche, dadurch gekennzeichnet, daß die Handhabungsvorrichtung vor der Entnahme der Datenträger aus dem Speicher die exakte Position des Datenträgers in der jeweiligen Station bestimmt.

28. Verfahren nach einem oder mehreren der voranstehenden Ansprüche, dadurch gekennzeichnet, daß nach dem Einlegen des Datenträgers in die Schreib-/Lesestation zunächst eine auf dem Datenträger selbst aufgebrachte Kennung ermittelt und mit der von der Handhabungsvorrichtung ermittelten Kennung verglichen wird.

29. Verfahren nach einem oder mehreren der voranstehenden Ansprüche, dadurch gekennzeichnet, daß die Position der Datenträger in einem Archivspiegel der Steuereinrichtung und/oder der die Datenträger anfordernden Rechenanlage gespeichert werden.

30. Verfahren nach Anspruch 29, dadurch gekennzeichnet, daß bei einer Unterbrechung der Verbindung der Rechenanlage zur Steuervorrichtung die Position der Datenträger im Speicher der Steuereinrichtung und der anfordernden Rechenanlage getrennt aktualisiert werden.

31. Verfahren nach Anspruch 30, dadurch gekennzeichnet, daß nach einer Wiederherstellung der Verbindung zwischen Rechenanlage und Steuereinrichtung ein Abgleich der in der Steuereinrichtung und der Rechenanlage gespeicherten Datenträgerpositionen vorgenommen und gegebenenfalls durch die Rechenanlage eine Anforderungsliste für Transportfunktionen erstellt wird, durch deren Abarbeiten Identität zwischen den in der Steuereinrichtung und der Rechenanlage gespeicherten Datenträgerpositionen hergestellt wird.

32. Automatisches Datenträgerarchiv, mit einem Datenträgerspeicher, einer Schreib-/Lesestation und einer Handhabungsvorrichtung zum Transport der Datenträger zwischen dem Datenträgerspeicher und der Schreib-/Lesestation, dadurch gekennzeichnet, daß bezüglich der Schreib-/Lesestation (18, 18a, 18b) ein Zwischenspeicher (22) für die Datenträger (24) so zugriffsnah angeordnet ist, daß die Datenträger schneller von dem Zwischenspeicher als von dem Datenträgerspeicher zur Schreib-/Lesestation transportiert werden können.

33. Datenträgerarchiv nach Anspruch 32, dadurch gekennzeichnet, daß die Datenträger (24) in dem Zwischenspeicher (22) so positionierbar sind, daß sie im Zwischenspeicher (22) eine im wesentlichen parallele Lage zu der im Schreib-/Lesegerät (18) einnehmen.

34. Datenträgerarchiv nach Anspruch 32 oder 33, dadurch gekennzeichnet, daß die Handhabungsvorrichtung (16) längs einer Bahn (14) verfahrbar ist.

35. Datenträgerarchiv nach Anspruch 34, dadurch gekennzeichnet, daß die Bahn (14) längs der Schreib-/Lesestation (18) und längs des Datenträgerspeichers (12) verläuft.

36. Datenträgerarchiv nach einem der Ansprüche 32 bis 35, dadurch gekennzeichnet, daß eine Ein-/Auslagerungsstation (36) für Datenträger (24) vorgesehen ist.

37. Datenträgerarchiv nach Anspruch 36, dadurch gekennzeichnet, daß die Ein-/Auslagerungsstation (36) an einem Ende der Bahn (14) angeordnet ist.

38. Datenträgerarchiv nach einem der Ansprüche 32 bis 37, dadurch gekennzeichnet, daß der Zwischenspeicher (22c) mitverfahrbar an der Handhabungsvorrichtung (16) angeordnet ist.

39. Datenträgerarchiv nach einem der Ansprüche 32 bis 38, dadurch gekennzeichnet, daß der Zwischenspeicher (22) im Greifbereich der in einer Zugriffsposition zur Schreib-/Lesestation stehenden Handhabungsvorrichtung angeordnet ist.

40. Datenträgerarchiv nach einem der Ansprüche 32 bis 39, dadurch gekennzeichnet, daß der Zwischenspeicher (22a, b) über der Schreib-/Lesestation (18) angeordnet ist.

41. Datenträgerarchiv nach einem der Ansprüche 32 bis 40, dadurch gekennzeichnet, daß die Handhabungsvorrichtung (16) einen Greifer (28) mit einem Sensor (29) zur Erkennung von Markierungen auf den Datenträgern (24) umfaßt.

42. Datenträgerarchiv nach einem der Ansprüche 32 bis 41, dadurch gekennzeichnet, daß das Datenträgerarchiv (10) hermetisch abschließbar ist.

43. Datenträgerarchiv nach einem der Ansprüche 32 bis 42, dadurch gekennzeichnet, daß das Datenträgerarchiv eine Steuereinrichtung zur automatischen Durchführung eines Transports der Datenträger aufweist und daß die Steuereinrichtung so konzipiert und vorbereitet ist, daß sie das Datenträgerarchiv gemäß dem Verfahren nach einem der Ansprüche 1 bis 31 steuert.

## Claims

1. Process for operating an automatic data carrier archive associated as data store with a computer, data carriers being transported back and forth between various stations of the data carrier archive by means of transportation procedures of a handling device for the data carriers, said procedures being carried out by a control facility of the data carrier archive, the stations of the data carrier archive comprising at least one data carrier storage means and one read/write station for the data carriers, characterized in that each transportation procedure is carried out by at least one transportation function, that a priority is allocated to each transportation function, that a transportation function with higher priority is carried out with precedence over a transportation function with low priority and that when a data carrier is requested in the read/write station by the computer at least the direct transportation between the read/write station and a further one of said stations is carried out with a transportation function with highest priority.

2. Process as defined in claim 1, characterized in that a first transportation function is provided for transportation of one of the data carriers between the data carrier storage means and an intermediate storage means arranged within close access to the read/write station, that a low priority is allocated to the first transportation function, that a second transportation function is provided for transportation of one of the data carriers between the intermediate storage means and the read/write station, that selected transportation procedures are prepared or completed by the first transportation function before or after their request by the computer and that upon request of a selected transportation procedure by the computer only the second transportation function is carried out with highest priority.

3. Process as defined in either of the preceding claims, characterized in that a frequently required transportation of a data carrier from the data carrier storage means to the read/write station is divided into two transportation functions, that the first transportation function relates to the transportation of the data carriers between the data carrier storage means and an intermediate storage means and the second transportation function to the transportation of the data carriers between the intermediate storage means and the read/write station, that the intermediate storage means is arranged for the handling device within close access to the respective read/write station, that a low priority is allocated to the first transportation function and a high priority to the second transportation function.

4. Process as defined in any of the preceding claims, characterized in that a transportation of a data carrier from the data carrier storage means to the read/write station requiring long paths of travel of the handling device is divided into two transportation functions, that the first transportation function relates to the transportation of the data carriers between the data carrier storage means and an intermediate storage means and the second transportation function to the transportation of the data carriers between the intermediate storage means and the read/write station, that the intermediate storage means is arranged for the handling device within close access to the respective read/write station, that a low priority is allocated to the first transportation function and a high priority to the second transportation function.

5. Process as defined in claim 2, characterized in that the selected transportation procedure is a predictable transportation procedure for a data carrier from or to the read/write station.

6. Process as defined in any of the preceding claims, characterized in that in the case of a data carrier located in a read/write station, prior to transportation of an additional data carrier to this read/write station the data carrier located therein is removed prior to the transportation of the additional data carrier.

7. Process as defined in any of claims 2 to 6, characterized in that the removal of the data carrier is carried out in the form of a selected transportation procedure.

8. Process as defined in any of the preceding claims, characterized in that an input/output station is provided as additional station.

9. Process as defined in claim 8, characterized in that the transportation procedures involving the read/write station are carried out in accordance with the transportation procedures carried out in the case of the data carrier storage means.

10. Process as defined in any of claims 2-9, characterized in that the intermediate storage means is defined as a close-access area of the data carrier storage means.

11. Process as defined in any of claims 2-10, characterized in that the intermediate storage means is arranged above the read/write stations.

12. Process as defined in any of claims 2-10, characterized in that the intermediate storage means is moved along with the handling device.

13. Process as defined in any of claims 2-12, characterized in that the intermediate storage means is arranged in the gripping range of the handling device located in an access position in relation to the read/write station.

14. Process as defined in any of the preceding claims, characterized in that the handling device is moved along a track extending alongside the read/write station and the data carrier storage means for carrying out transportation procedures.

15. Process as defined in claim 14, characterized in that the handling device is moved along the track for carrying out the first transportation function.

16. Process as defined in claim 14 or 15, characterized in that the handling device stops on the track for carrying out the second transportation function.

17. Process as defined in any of the preceding claims, characterized in that the control means automatically selects the transportation function with low priority, in particular the first transportation function, at regular intervals as required.

18. Process as defined in any of the preceding claims, characterized in that a transportation function with low priority is used to store recordable data carriers in the intermediate storage means.

19. Process as defined in any of the preceding claims, characterized in that a low priority is allocated to a transportation function for checking the availability of individual data carriers in the data carrier storage means.

20. Process as defined in any of the preceding claims, characterized in that a low priority is allocated to a transportation function for rearranging the data carriers within the data carrier storage means.

21. Process as defined in any of the preceding claims, characterized in that a cleaning data carrier is inserted with a transportation function having a priority lower than the highest priority.

22. Process as defined in any of claims 18 to 21, characterized in that the transportation function with lowest priority is carried out in continuous operation, when necessary interrupted by transportation functions of higher priority.

23. Process as defined in claim 22, characterized in that apart from the transportation function with lowest priority an additional function with next higher priority is provided for a continuous operation as required.

24. Process as defined in any of the preceding claims, characterized in that the allocation of the priorities to the individual transportation functions is altered during the operation of the archive.

25. Process as defined in any or several of the preceding claims, characterized in that the data carriers to be transported are identified prior to their removal from the data store via a marking adapted to be sensed from outside.

26. Process as defined in claim 25, characterized in that optical and/or magnetic identification carriers are used as markings.

27. Process as defined in any or several of the preceding claims, characterized in that the handling device determines the exact position of the data carrier in the respective station prior to the removal of the data carriers from the storage means.

28. Process as defined in any or several of the preceding claims, characterized in that after the data carrier is inserted into the read/write station an identification applied to the data carrier itself is first ascertained and compared with the identification ascertained by the handling device.

29. Process as defined in any or several of the preceding claims, characterized in that the positions of the data carriers are stored in an archive directory of the control means and/or of the computer requesting the data carriers.

30. Process as defined in claim 29, characterized in that when the connection of the computer to the control device is interrupted the positions of the data carriers are updated separately in the memory of the control means and of the requesting computer.

31. Process as defined in claim 30, characterized in that once the connection between computer and control means has been reestablished, a collation of the data carrier positions stored in the control means and the computer is carried out and, when necessary, a request list for transportation functions is compiled by the computer and during the processing of said list identity is established between the data carrier positions stored in the control means and the computer.

32. Automatic data carrier archive, comprising a data carrier storage means, a read/write station and a handling device for transporting the data carriers between the data carrier storage means and the read/write station, characterized in that an intermediate storage means (22) for the data carriers (24) is arranged within such close access with respect to the read/write station (18, 18a, 18b) that the data carriers can be transported to the read/write station more quickly from the intermediate storage means than from the data carrier storage means.

33. Data carrier archive as defined in claim 32, characterized in that the data carriers (24) are positionable in the intermediate storage means (22) such that in the intermediate storage means (22) they take up a position essentially parallel to that in the read/write device (18).

34. Data carrier archive as defined in claim 32 or 33, characterized in that the handling device (16) is movable along a track (14).

35. Data carrier archive as defined in claim 34, characterized in that the track (14) extends along the read/write station (18) and along the data carrier storage means (12).

36. Data carrier archive as defined in any of claims 32 to 35, characterized in that an input/output station (36) for data carriers (24) is provided.

37. Data carrier archive as defined in claim 36, characterized in that the input/output station (36) is arranged at one end of the track (14).

38. Data carrier archive as defined in any of claims 32 to 37, characterized in that the intermediate storage means (22c) is arranged so as to be moved along on the handling device (16).

39. Data carrier archive as defined in any of claims 32 to 38, characterized in that the intermediate storage means (22) is arranged in the gripping range of the handling device located in an access position in relation to the read/write station.

40. Data carrier archive as defined in any of claims 32 to 39, characterized in that the intermediate storage means (22a, b) is arranged above the read/write station (18).

41. Data carrier archive as defined in any of claims 32 to 40, characterized in that the handling device (16) comprises a gripper means (28) with a sensor (29) for identifying markings on the data carriers (24).

42. Data carrier archive as defined in any of claims 32 to 41, characterized in that the data carrier archive (10) is adapted to be closed off hermetically.

43. Data carrier archive as defined in any of claims 32 to 42, characterized in that the data carrier archive has a control means for automatically carrying out a transportation of the data carriers and that the control means is designed and prepared such that it controls the data carrier archive in accordance with the process defined in any of claims 1 to 31.

## Revendications

1. Procédé pour l'exploitation d'une archive automatique de supports de données associée en tant que stockage de données pour une installation de calcul, des supports de données étant transportés par des opérations de transport, exécutées par un dispositif de commande de l'archive de supports de données, d'un dispositif de manipulation pour les supports de données, en va-et-vient entre les différentes stations de l'archive de supports de données, lesdites stations de l'archive de supports de données comprenant au moins un stockage de supports de données et une station d'écriture/lecture pour les supports de données, caractérisé en ce que l'on exécute chaque opération de transport par au moins une fonction de transport, en ce qu'on associe une priorité à chaque fonction de transport, en ce que l'on exécute une fonction de transport avec une priorité plus élevée de façon prioritaire par rapport à une fonction de transport avec une priorité basse, et en ce que lorsque l'installation de calcul donne l'ordre d'amener un support de données dans la station d'écriture/lecture, au moins le transport direct entre la station d'écriture/lecture et une autre parmi les stations est exécuté avec une fonction de transport avec la priorité la plus élevée.

2. Procédé selon la revendication 1, caractérisé en ce que l'on prévoit une première fonction de transport, dans laquelle un transport de l'un des supports de données a lieu entre le stockage de supports de données et un stockage intermédiaire agencé à proximité d'accès de la station d'écriture/lecture, en ce qu'on attribue à la première fonction de transport une priorité basse, en ce qu'on prévoit une seconde fonction de transport, pour laquelle un transport de l'un des supports de données a lieu entre les stockages intermédiaires et la station d'écriture/lecture, en ce que des opérations de transport choisies sont préparées ou terminées par la première fonction de transport avant ou après que l'installation de calcul en ait donné l'ordre, et en ce que lorsque l'installation de calcul a donné l'ordre d'une opération de transport choisie, on exécute uniquement la seconde fonction de transport avec la priorité la plus élevée.

3. Procédé selon l'une des revendications précédentes, caractérisé en ce qu'un transport fréquemment nécessaire d'un support de données depuis le stockage de supports de données vers la station d'écriture/lecture est subdivisé en deux fonctions de transport, en ce que la première fonction de transport concerne le transport des supports de données entre le stockage de supports de données et un stockage intermédiaire et la seconde fonction de transport concerne le transport des supports de données entre le stockage intermédiaire et la station d'écriture/lecture, en ce que le stockage intermédiaire est agencé pour le dispositif de manipulation à proximité d'accès de la station d'écriture/lecture respective, en ce que l'on attribue à la première fonction de transport une priorité basse et à la seconde fonction de transport une priorité élevée.

4. Procédé selon l'une quelconque des revendications précédentes, caractérisé en ce qu'un transport d'un support de données depuis le stockage de supports de données jusqu'à la station d'écriture/lecture qui exige un trajet de déplacement prolongé du dispositif de manipulation est subdivisé en deux fonctions de transport, en ce que la première fonction de transport concerne le transport des supports de données entre le stockage de supports de données et un stockage intermédiaire, et la seconde fonction de transport concerne le transport des supports de données entre le stockage intermédiaire et la station d'écriture/lecture, en ce que le stockage intermédiaire est agencé pour le dispositif de manipulation à proximité d'accès de la station d'écriture/lecture respective, et en ce qu'on attribue à la première fonction de transport une priorité basse et à la seconde fonction de transport une priorité élevée.

5. Procédé selon la revendication 2, caractérisé en ce que l'opération de transport choisie est une opération de transport prévisible d'un support de données depuis ou vers la station d'écriture/lecture.

6. Procédé selon l'une quelconque des revendications précédentes, caractérisé en ce que dans le cas où un support de données se trouve dans une station d'écriture/lecture, on procède avant un transport d'un autre support de données à cette station d'écriture/lecture à un enlèvement du support de données qui se trouve dans cette station, avant le transport de l'autre support de données.

7. Procédé selon l'une quelconque des revendications 2 à 6, caractérisé en ce que l'enlèvement du support de données a lieu sous la forme d'une opération de transport choisie.

8. Procédé selon l'une quelconque des revendications précédentes, caractérisé en ce que l'on prévoit en tant que station supplémentaire une station de dépose/enlèvement.

9. Procédé selon la revendication 8, caractérisé en ce que les opérations de transport ont lieu, en tenant compte de la station d'écriture/lecture, de façon correspondante aux opérations de transport exécutées dans le cas du stockage de supports de données.

10. Procédé selon l'une quelconque des revendications 2 à 9, caractérisé en ce que le stockage intermédiaire est défini comme étant la région d'accès proche du stockage de supports de données.

11. Procédé selon l'une quelconque des revendications 2 à 10, caractérisé en ce que le stockage intermédiaire est agencé au-dessus des stations d'écriture/lecture.

12. Procédé selon l'une quelconque des revendications 2 à 10, caractérisé en ce que le stockage intermédiaire est déplacé conjointement avec le dispositif de manipulation.

13. Procédé selon l'une quelconque des revendications 2 à 12, caractérisé en ce que le stockage intermédiaire est agencé dans la région d'intervention du dispositif de manipulation qui se trouve dans une position d'accès vis-à-vis de la station d'écriture/lecture.

14. Procédé selon l'une quelconque des revendications précédentes, caractérisé en ce que le dispositif de manipulation est déplacé, pour exécuter des opérations de transport, le long d'une voie qui s'étend le long de la station d'écriture/lecture et du stockage de supports de données.

15. Procédé selon la revendication 14, caractérisé en ce que le dispositif de manipulation est déplacé le long de la voie pour exécuter la première fonction de transport.

16. Procédé selon l'une ou l'autre des revendications 14 ou 15, caractérisé en ce que le dispositif de manipulation reste stationnaire sur la voie pour exécuter la seconde fonction de transport.

17. Procédé selon l'une quelconque des revendications précédentes, caractérisé en ce que le dispositif de commande choisit automatiquement la fonction de transport avec basse priorité, en particulier la première fonction de transport, si nécessaire à des intervalles de temps réguliers.

18. Procédé selon l'une quelconque des revendications précédentes, caractérisé en ce qu'on utilise une fonction de transport à basse priorité pour le dépôt de supports de données inscriptibles dans le stockage intermédiaire.

19. Procédé selon l'une quelconque des revendications précédentes, caractérisé en ce que l'on attribue une basse priorité à une fonction de transport pour vérifier la disponibilité de supports de données individuels dans le stockage de supports de données.

20. Procédé selon l'une quelconque des revendications précédentes, caractérisé en ce que l'on attribue une basse priorité à une fonction de transport pour la réorganisation des supports de données à l'intérieur du stockage de supports de données.

21. Procédé selon l'une quelconque des revendications précédentes, caractérisé en ce que l'on exécute une dépose d'un support de données de nettoyage avec une fonction de transport dont la priorité est plus basse que la priorité la plus élevée.

22. Procédé selon l'une quelconque des revendications 18 à 21, caractérisé en ce que l'on exécute la fonction de transport avec la plus basse priorité en service permanent, le cas échéant avec interruption par des fonctions de transport de priorité plus élevée.

23. Procédé selon la revendication 22, caractérisé en ce que l'on prévoit, outre la fonction de transport avec la plus basse priorité, une autre fonction avec une priorité immédiatement plus élevée pour un service permanent en cas de besoin.

24. Procédé selon l'une quelconque des revendications précédentes, caractérisé en ce que l'on modifie l'attribution des priorités aux fonctions de transport individuelles pendant l'exploitation de l'archive.

25. Procédé selon l'une quelconque des revendications précédentes, caractérisé en ce que les supports de données à transporter sont identifiés au moyen d'un marquage lisible depuis l'extérieur avant l'enlèvement hors du stockage de données.

26. Procédé selon la revendication 25, caractérisé en ce que l'on utilise en tant que marquages des éléments porteurs d'élément distinctif optiques et/ou magnétiques.

27. Procédé selon l'une quelconque des revendications précédentes, caractérisé en ce que le dispositif de manipulation détermine avant l'enlèvement des supports de données hors du stockage la position exacte du support de données dans la station respective.

28. Procédé selon l'une quelconque des revendications précédentes, caractérisé en ce qu'après mise en place du support de données dans la station d'écriture/lecture on détermine tout d'abord un élément distinctif appliqué sur le support de données lui-même et on le compare à l'élément distinctif déterminé par le dispositif de manipulation.

29. Procédé selon l'une quelconque des revendications précédentes, caractérisé en ce que la position des supports de données est mémorisée dans un registre d'archive du dispositif de commande et/ou dans l'installation de calcul qui demande les supports de données.

30. Procédé selon la revendication 29, caractérisé en ce que lors d'une interruption de la liaison entre l'installation de calcul et le dispositif de commande, la position des supports de données est actualisée séparément dans la mémoire du dispositif de commande et de l'installation de calcul qui procède à la demande.

31. Procédé selon la revendication 30, caractérisé en ce qu'après rétablissement de la liaison entre l'installation de calcul et le dispositif de commande, on procède à une comparaison des positions des supports de données stockées dans le dispositif de commande et dans l'installation de calcul, et on établit le cas échéant au moyen de l'installation de calcul une liste d'ordres pour des fonctions de transport, et pendant le traitement de ladite liste on établit une identité entre les positions des supports de données mémorisées dans le dispositif de commande et dans l'installation de calcul.

32. Archive automatique pour support de données, comprenant un stockage de support de données, une station d'écriture/lecture et un dispositif de manipulation pour le transport des supports de données entre le stockage de support de données et la station d'écriture/lecture, caractérisée en ce qu'un stockage intermédiaire (22) pour les supports de données (24) est agencé à proximité d'accès par rapport à la station d'écriture/lecture (18, 18a, 18b) de telle manière que les supports de données peuvent être transportés vers la station d'écriture/lecture plus rapidement depuis le stockage intermédiaire que depuis le stockage de supports de données.

33. Archive selon la revendication 32, caractérisée en ce que les supports de données (24) peuvent être positionnés dans le stockage intermédiaire (22) de telle manière qu'ils occupent dans le stockage intermédiaire (22) une position sensiblement parallèle à celle dans l'appareil d'écriture/lecture (18).

34. Archive selon l'une ou l'autre des revendications 32 ou 33, caractérisée en ce que le dispositif de manipulation (16) est déplaçable le long d'une voie (14).

35. Archive selon la revendication 34, caractérisée en ce que la voie (14) s'étend le long de la station d'écriture/lecture (18) et le long du stockage de supports de données (12).

36. Archive selon l'une quelconque des revendications 32 à 35, caractérisée en ce qu'il est prévu une station de dépose/enlèvement (36) pour les supports de données (24).

37. Archive selon la revendication 36, caractérisée en ce que la station de dépose/enlèvement (36) est agencée à une extrémité de la voie (14).

38. Archive selon l'une quelconque des revendications 32 à 37, caractérisée en ce que le stockage intermédiaire (22c) est agencé de manière à pouvoir être entraîné conjointement sur le dispositif de manipulation (16).

39. Archive selon l'une quelconque des revendications 32 à 38, caractérisée en ce que le stockage intermédiaire (22) est agencé dans la zone d'intervention du dispositif de manipulation qui se trouve dans une position d'accès par rapport à la station d'écriture/lecture.

40. Archive selon l'une quelconque des revendications 32 à 39, caractérisée en ce que le stockage intermédiaire (22a, b) est agencé au-dessus de la station d'écriture/lecture (18).

41. Archive selon l'une quelconque des revendications 32 à 40, caractérisée en ce que le dispositif de manipulation (16) comprend un élément de saisie (28) avec un capteur (29) pour reconnaître des marquages sur les supports de données (24).

42. Archive selon l'une quelconque des revendications 32 à 41, caractérisée en ce que l'archive de supports de données (10) peut être refermée de hermétique.

43. Archive selon l'une quelconque des revendications 32 à 42, caractérisée en ce que l'archive de supports de données comporte un dispositif de commande pour procéder automatiquement à un transport des supports de données, et en ce que le dispositif de commande est conçu et préparé de telle manière qu'il commande l'archive de supports de données selon le procédé de l'une des revendications 1 à 31.
